(19) Europäisches Patentamt
European Patent Office
Office européen des brevets

(11) **EP 2 389 611 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(21) Anmeldenummer: **10702822.7**

(22) Anmeldetag: **22.01.2010**

(51) Int Cl.:
***G02C 7/02*** *(2006.01)*  ***G06F 17/50*** *(2006.01)*

(86) Internationale Anmeldenummer:
**PCT/EP2010/000396**

(87) Internationale Veröffentlichungsnummer:
**WO 2010/084019 (29.07.2010 Gazette 2010/30)**

(54) **DESIGNSTEUERUNG MITTELS EINES DESIGNVIELECKS**

CONTROLLING DESIGNS USING A DESIGN POLYGON

COMMANDE DE DESIGN AU MOYEN D'UN POLYGONE DE DESIGN

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.01.2009 DE 102009005847**

(43) Veröffentlichungstag der Anmeldung:
**30.11.2011 Patentblatt 2011/48**

(73) Patentinhaber: **Rodenstock GmbH**
**80687 München (DE)**

(72) Erfinder:
 • **ALTHEIMER, Helmut**
  **87650 Baisweil-Lauchdorf (DE)**
 • **BECKEN, Wolfgang**
  **81541 Munchen (DE)**
 • **ESSER, Gregor**
  **81735 München (DE)**
 • **UTTENWEILER, Dietmar**
  **82057 Icking (DE)**
 • **WELK, Andrea**
  **81547 München (DE)**
 • **BROSIG, Jochen**
  **85604 Zorneding (DE)**
 • **BUTZ, Christina**
  **81545 München (DE)**
 • **JUNG, Nadine**
  **80689 München (DE)**
 • **NICKE, Katrin**
  **82061 Neuried (DE)**
 • **SCHWARZ, Ilka**
  **82538 Geretsried (DE)**
 • **BICHLER, Robert**
  **41749 Viersen (DE)**
 • **ZIMMERMANN, Martin**
  **85253 Erdweg-Kleinberghofen (DE)**
 • **MÜLLER, Werner**
  **75443 Ötisheim (DE)**
 • **STETTER, Hans**
  **81369 München (DE)**

(74) Vertreter: **Müller-Boré & Partner**
**Patentanwälte**
**Grafinger Straße 2**
**81671 München (DE)**

(56) Entgegenhaltungen:
**WO-A1-2008/089998**

 • **STEFANIE SCHULDT: "ysis - Natürliches sehen erleben" DEUTSCHE OPTIKER ZEITUNG, XX, DE, Nr. 5/2004, 1. Mai 2004 (2004-05-01), Seiten 38-43, XP002398937**

EP 2 389 611 B1

**Beschreibung**

Die Erfindung betrifft eine Designsteuerung mittels eines Designvielecks.

Individuelle Brillengläser, insbesondere progressive individuelle Brillengläser sind in zahlreichen Patentveröffentlichungen beschrieben worden, beispielsweise der DE 197 01 312, der DE 103 13 275, der WO 01/81979, der US 6 871 955 oder der EP 0 880 046. Sie weisen deutlich bessere Abbildungseigenschaften als konventionelle Brillengläser auf, da die individuelle Gebrauchssituation des Brillenträgers bei der Berechnung und Optimierung berücksichtigt wird.

Die Optimierung von progressiven Brillengläsern erfolgt in der Regel durch Minimierung einer Zielfunktion, in welcher Ziel- bzw. Sollwerte für zumindest eine optische Größe (zum Beispiel Astigmatismus und/oder Brechkraft) oder Ziel- bzw. Sollwerte für zumindest einen Abbildungsfehler (zum Beispiel astigmatischer Fehler bzw. astigmatische Abweichung und/oder Refraktionsfehler) des progressiven Brillenglases eingehen. Der Refraktionsfehler stellt die Differenz des Brechwerts des Brillenglases von dem Brechwert, welcher mittels Refraktionsbestimmung ermittelt wird, dar. Die astigmatische Abweichung bzw. der astigmatische Fehler stellt die Differenz des Astigmatismus des Brillenglases von dem Astigmatismus, weicher mittels Refraktionsbestimmung ermittelt wird, dar. Vorzugsweise handelt es sich dabei um Werte in Gebrauchsstellung des Brillenglases, d.h. unter Berücksichtigung des Systems Brillenglas-Auge.

Die in die Zielfunktion eingehenden Ziel- bzw. Sollwerte der zumindest einen optischen Eigenschaft (insbesondere des Astigmatismus) oder des zumindest einen Abbildungsfehlers (insbesondere der astigmatischen Abweichung) charakterisieren das Design eines Brillenglases. Darüber hinaus kann das Brillenglasdesign ein geeignetes Objektabstandsmodell umfassen. Das Objektabstandsmodell kann beispielsweise eine Objektabstandsfunktion, welche als die reziproke Objektentfernung entlang der Hauptlinie definiert ist, umfassen. Ein standardisiertes Objektabstandsmodel ist zum Beispiel in DIN 58 208 Teil 2 (vgl. Bild 6) angegeben. Das Objektabstandsmodel kann jedoch von diesem standardisierten Objektabstandsmodel abweichen.

Ein Design eines Brillenglases kann durch mehrere Designparameter charakterisiert werden, wie zum Beispiel die Größe und insbesondere die Lage der Sehbereiche (Ferne, Nähe und Zwischen- bzw. Progressionsbereich). Die Lage der Sehbereiche kann zum Beispiel durch die Hauptdurchblickpunkte (Bezugspunkte Ferne und Nähe) festgelegt werden, welche dann als Parameter des Designs eingehen. Weitere Designparameter sind zum Beispiel die maximal zulässigen Abbildungsfehler und/oder Gradienten der Abbildungsfehler und/oder Parameter, welche das Objektabstandsmodell charakterisieren.

Progressive Brillengläser können zudem unterschiedliche Designs aufweisen, zum Beispiel in Abhängigkeit von Tätigkeitsschwerpunkten oder anderen Anwendungsschwerpunkten. So bieten die Hersteller neben einem Universalgleitsichtglas oft auch progressive Brillengläser für den Bildschirmarbeitsplatz, kleinere Brillenfassung, etc. an.

Eine Aufgabe der vorliegenden Erfindung ist es, eine einfache Demonstration bzw. Visualisierung und Bestimmung bzw. Berechnung eines Designs für ein progressives Brillenglas zur Designsteuerung zu ermöglichen.

Diese Aufgabe wird durch die in den unabhängigen Ansprüchen definierten Verfahren, Vorrichtungen, Computerprogrammerzeugnisse, Speichermedien und graphischen Benutzerschnittstellen gelöst. Bevorzugte Ausführungsformen sind Gegenstand der abhängigen Ansprüche.

Gemäß der Erfindung wird insbesondere ein Verfahren mit den in Anspruch 1 angegebenen Schritten vorgeschlagen.

Insbesondere wird ein computergestütztes Verfahren zum Ermitteln bzw. Berechnen von Designparametern $D^j, j=1,...,M$, eines Designs eines progressiven Brillenglases anhand eines vorgegebenen Designvielecks vorgeschlagen, wobei:

- jeder Punkt $P$ innerhalb des Designvielecks jeweils ein Design bezeichnet bzw. bestimmt und das Design an dem Punkt $P$ durch Designwerte $D^j(P)$ der Designparameter $D^j$ charakterisiert ist;
- Designwerte $D^j(P_{Eck})$, $j=1,...,M$, der Designparameter $D^j$, welche das Design an den jeweiligen Eckpunkten $P_{Eck}$ des Designvielecks charakterisieren, vorgegeben bzw. vorgebbar sind;
- optional Werte $D^j(P_{Zusatz})$ der Designparameter $D^j$, welche das Design an zumindest einem zusätzlichen Punkt $P_{Zusatz}$ innerhalb des Designvielecks charakterisieren, vorgegeben bzw. vorgebbar sind,

wobei das Verfahren die Schritte umfasst:

- Vorgeben eines Punktes $P_{Design}$ innerhalb des Designvielecks, wobei der Punkt $P_{Design}$ das zu ermittelnde Design bestimmt;
- Ermitteln eines Werts $D^j(P_{Design})$ eines jeden Designparameters $D^j, j=1,..., M$, des zu ermittelnden Designs an dem Punkt $P_{Design}$ mittels einer Interpolation zumindest eines Teils der vorgegebenen Werte $D^j(P_{Eck})$, $j=1,...,M$ an den Eckpunkten $P_{Eck}$ und gegebenenfalls zumindest eines Teils der vorgegebenen Werte $D^j(P_{Zusatz})$ des Designparameters $D^j$ an dem zumindest einem zusätzlichen Punkt $P_{Zusatz}$;

und wobei $M$ die Anzahl der Designparameter bezeichnet.

Das Designvieleck kann ein N-Eck im zwei oder dreidimensionalen Raum (zum Beispiel ein Dreieck, Viereck, Fünfeck, eine Pyramide, usw.) sein. Die Eckpunkte $P_{Eck}$ des Designvielecks können in einer Ebene liegen. Dabei umfasst der Begriff "Punkte innerhalb des Designvielecks" im Rahmen dieser Anmeldung alle Punkte, die in dem von den Seitenkanten bzw. -flächen des Designvielecks umschlossenen Raum liegen, inklusive aller Punkte, welche auf den Seitenkanten bzw. -flächen des Designvielecks liegen (d.h. alle Randpunkte).

Die sich voneinander unterscheidenden Eckdesigns an den Eckpunkten $P_{Eck}$ des Designvielecks sind insbesondere durch unterschiedliche Werte zumindest eines der Designparameter $D^j$ charakterisiert bzw. weisen unterschiedliche Werte zumindest eines Designparameters auf. Das Designvieleck kann derart konstruiert werden, dass entlang jeder der Seiten des Designvielecks, welche zwei Eckpunkte des Designvielecks verbindet, ein zumindest teilweise stetiger Übergang der Werte des zumindest einen Designparameters erfolgt. Das Designvieleck kann ein gleichseitiges Designvieleck, insbesondere ein gleichseitiges Designdreieck sein.

Die Ecken des Designvielecks können für unterschiedliche Anwendungs- und/oder Designsschwerpunkte stehen, wie zum Beispiel fernbereichbetontes Design, nahbereichbetontes Design, zwischenbereichbetontes Design oder alternativ für unterschiedlich weiche/harte Designs.

Vorzugsweise erfolgt die Interpolation in Abhängigkeit von der räumlichen Lage des vorgegeben Punktes $P_{Design}$. Je näher der vorgegebene Punkt im Designvieleck an einer Ecke bzw. an einem Eckpunkt liegt, desto höher ist die Gewichtung des dem Eckpunkt zugeordneten Eckdesigns und desto ausgeprägter wird das zu berechnende bzw. bestimmende Design an dieses Eckdesign angepasst. Anhand der räumlichen Lage eines vorgegebenen Punkts innerhalb des Designvielecks ist es möglich, mittels einer geeigneten Interpolation und/oder Gewichtung der vorgegebenen Werte des zumindest einen Designparameters der Eckdesigns in Abhängigkeit von der räumlichen Lage des Punktes innerhalb des Designvielecks, den Wert des jeweiligen Designparameters zu bestimmen. Beispielsweise kann die Gewichtung jedes der Eckdesigns abhängig von dem Abstand zwischen dem vorgegebenen Punkt $P_{Design}$ und dem jeweiligen Eckpunkt erfolgen.

Ebenfalls ist es möglich, zusätzlich zu den Designs in den Eckpunkten (Eckdesigns) optional ein oder mehrere weitere Designs, welche durch vorgegebene oder vorgebbare Werte der Designparameter charakterisiert sind, an zumindest einem zusätzlichen Punkt $P_{Zusatz}$ innerhalb des Designvielecks vorzugeben. Somit kann zum Beispiel die Interpolation feiner gesteuert werden.

Der zusätzliche Punkt $P_{Zusatz}$ kann ein Zentralpunkt sein, welcher vorzugsweise mit dem Schwerpunkt des Designvielecks zusammenfällt und welcher ein vorgegebenes Zentral- bzw. Grunddesign bestimmt. Das Zentral- bzw. Grunddesign kann zum Beispiel ein Design für ein universelles, ausgewogenes progressives Brillenglas sein. Die Gewichtung bzw. Interpolation kann dann unter Berücksichtigung des Abstands zwischen dem Zusatzpunkt $P_{Zusatz}$ (beispielsweise dem Zentralpunkt) und dem Punkt $P_{Design}$ erfolgen. Die Eckdesigns können Designs sein, welche von dem Zentral- bzw. Grunddesign, zum Beispiel mittels einer Variation eines Parameters oder mehrerer Parameter abgeleitet sind. Die Eckdesigns können zum Beispiel durch Extremwerte, welche zum Beispiel der maximal zulässigen Abweichungen eines oder mehreren Designparameter des Zentral- bzw. Grunddesigns entsprechen, charakterisiert werden.

Zusätzlich oder alternativ ist es möglich, die Werte $D^j(P_{Zusatz})$ der Designparameter $D^j$, j=1... M, an jeweils zumindest einem Zusatzpunkt $P_{Zusatz}$ auf jeder der Seitenkanten des Designvielecks vorzugeben. Die Gewichtung bzw. Interpolation kann dann wie oben beschrieben unter Berücksichtigung des Abstands zwischen dem Zusatzpunkt $P_{Zusatz}$ und dem Punkt $P_{Design}$ erfolgen.

Wie bereits oben ausgeführt kann jedes Design durch eine Vielzahl von Designparametern $D^j$, j =1,...,M, charakterisiert werden, wie zum Beispiel die Größe der Sehbereiche, die Lage der Sehbereiche, die räumliche Lage der Hauptdurchblickpunkte (Bezugspunkte Ferne und Nähe), die maximal zulässigen Abbildungsfehler und/oder Gradienten der Abbildungsfehler, Parameter, welche das Objektabstandsmodell charakterisieren, usw. Die Werte der Designparameter, welche das jeweilige Design charakterisieren, können zum Beispiel als Datenfiles abgespeichert werden und/oder in einer Datenbank abgelegt und von dort ausgelesen werden.

Jeder Punkt innerhalb des Designvielecks bestimmt ein Design für ein progressives Brillenglas, welches durch einen Tupel oder einen Set von Werten der Designparameter $D^j$ charakterisiert ist. Ein Vorteil des erfindungsgemäßen Verfahrens ist, dass es eine schnelle und effiziente Berechnung eines neuen Designs mit einer Vielzahl von Designparametern ermöglicht. Ein weiterer Vorteil des bevorzugten erfindungsgemäßen Verfahrens ist die einfache und intuitive Darstellung bzw. Visualisierung von komplexen Eigenschaften progressiver Designs, welche durch eine Vielzahl unterschiedlicher und einem Benutzer zum Teil schwer zugänglichen Kombinationen von Designparametern charakterisiert ist. Dank der einfachen und intuitiven Darstellung eines Designs als Punkt innerhalb eines Designvielecks, wird die Interaktion eines Benutzers (zum Beispiel eines Konstrukteurs oder eines Augenoptikers) über eine entsprechende Vorrichtung erheblich vereinfacht und der Designauffindungsprozeß erheblich erleichtert, beschleunigt und verbessert. Somit ist es möglich, schnell und effizient ein Design und ein nach diesem Design hergestelltes oder herzustellendes progressives Brillenglas zu ermitteln, welches optimal an die individuellen Anforderungen des Brillenträgers angepasst ist.

Mit dem vorliegenden Verfahren können schnell und effizient neben individuellen universellen progressiven Brillengläsern, progressive Brillengläser für unterschiedlichste Tätigkeitsschwerpunkte, wie zum Beispiel Sport-progressive Brillengläser, progressive Brillengläser für die Arbeit am Computerbildschirm, usw. hergestellt werden. Ebenfalls ist es möglich, individuelle Raum- oder Nahgläser zu berechnen und herzustellen, bei welchen der Fernteil nicht zum Sehen ins Unendliche, sondern zum Sehen in eine endliche Objektentfernung ausgelegt ist. Bei solchen progressiven Brillengläsern kann anstelle eines Fernbezugs- bzw. Ferndesignpunkts (auch Designpunkt Ferne genannt), ein Mittenbezugs- bzw. Mittendesignpunkt (auch Designpunkt Mitte genannt) vorgegeben werden.

Da mit dem erfindungsgemäßen Verfahren unterschiedliche Designvarianten schnell und effizient erzeugt und gegeneinander getestet werden können, kann der Aufwand für die Entwicklung und Herstellung von konventionellen, wirkungsoptimierten oder individuellen progressiven Brillengläsern erheblich reduziert werden.

Die Interpolation kann eine beliebige Interpolation, zum Beispiel eine lineare, eine quadratische, eine kubische, etc. Interpolation sein.

Die Interpolation kann zum Beispiel eine zumindest abschnittsweise lineare Interpolation sein. Insbesondere können Abschnitte vorgegeben werden, in welchen die vorgegebenen Werte unterschiedlich interpoliert werden, wobei in jedem der Abschnitte die Interpolation der vorgegebenen Designwerte zum Beispiel linear erfolgt. Durch Aufteilen in mehrere Abschnitte ist es möglich, die Interpolation feiner zu steuern. Bevorzugterweise ist die Interpolation eine lineare Interpolation.

Das Designvieleck kann ein Designdreieck sein, welches vorzugsweise ein gleichseitiges Designdreieck ist. Ein Designdreieck ermöglicht eine sehr einfache und intuitive Darstellung der Eigenschaften eines Designs (als Punkt innerhalb des Designdreiecks) sowie eine schnelle und effiziente Ermittlung der Werte der Designparameter des zu ermittelnden Designs.

Gemäß einem Aspekt sind zusätzlich zu den Werten der Designparameter in den Eckpunkten des Designvielecks (zum Beispiel des Designdreiecks) die Werte $D^j(P_{Zentral})$ der Designparameter $D^j$, $j = 1,...,M$ , welche das Design an einem Zentralpunkt $P_{Zentral}$ innerhalb des Designvielecks charakterisieren, vorgegeben bzw. vorgebbar. Der Wert $D^j(P_{Design})$ eines jeden Designparameters $D^j$ an dem Punkt $P_{Design}$ kann dann mittels einer Interpolation zumindest eines Teils der vorgegebenen Werte $D^j(P_{Eck})$ des Designparameters $D^j$ an den Eckpunkten $P_{Eck}$ und des Werts $D^j(P_{Zentral})$ des Designparameters $D^j$ an dem Zentralpunkt $P_{Zentral}$ berechnet werden.

Die (abschnittsweise) Interpolation kann zum Beispiel folgende Schritte umfassen:

- Ermitteln des Durchstoßpunkts $P_{Durchstoß}$ in Richtung des Vektors $P_{Zentral}P_{Design}$ der durch den Zentralpunkt $P_{Zentral}$ und den Punkt $P_{Design}$ verlaufenden Gerade mit einer der Seitenkanten des Designvielecks, wobei der Vektor $P_{Zentral}P_{Design}$ von dem Zentralpunkt $P_{Zentral}$ startet und an dem Punkt $P_{Design}$ endet;
- Ermitteln der beiden nächstliegenden Punkte $P_{NL1}$ und $P_{NL2}$ auf der Seitenkante des Designvielecks, auf welcher auch der Durchstoßpunkt $P_{Durchstoß}$ liegt, in welchen entsprechende Werte $D^j(P_{NL1})$ bzw. $D^j(P_{NL2})$ des Designparameters $D^j$ vorgegebenen sind, wobei der Durchstoßpunkt $P_{Duchstoß}$ zwischen den beiden Punkten $P_{NL1}$ und $P_{NL2}$ auf der Seitenkante des Designvielecks liegt;
- Ermitteln des Werts $Dj(P_{Durchstoß})$ des Designparameters $D^j$ an dem Durchstoßpunkt $P_{Durchstoß}$ mittels einer ersten Interpolation der Werte der Designparameter $D^j(P_{NL1})$ und $D^j(P_{NL2})$ an den beiden Punkten $P_{NL1}$ und $P_{NL2}$;
- Ermitteln des Werts $D^j(P_{Design})$ des Designparameters $D^j$ an dem Punkt $P_{Design}$ mittels einer zweiten Interpolation des ermittelten Werts $D^j(P_{Durchstoß})$ des Designparameters $D^j$ an dem Durchstoßpunkt $P_{Durchstoß}$ und dem Wert $D^j(P_{Zentral})$ des Designparameters $D^j$ an dem Zentralpunkt $P_{Zentral}$.

Vorzugsweise erfolgt die Interpolation in einem Polar- Koordinatensystem $\{\varphi,\rho\}$, wobei der Ursprung des Koordinatensystems mit dem Zentralpunkt $P_{Zentral}$ zusammenfällt, und wobei die erste Interpolation eine Interpolation, vorzugsweise eine lineare Interpolation, nach der Polar- Koordinate $\varphi$ ist und die zweite Interpolation eine Interpolation, vorzugsweise eine lineare Interpolation, nach der Polar-Koordinate $\rho$ ist.

Das Polar-Koordinatensystem kann ein beliebiges Polar-Koordinatensystem sein. Beispielsweise ist der Winkel $\varphi$ der Winkel zwischen einer Gerade, welche durch den Zentralpunkt verläuft und parallel zu einer der Seiten des Designvielecks ist, und der Gerade, welche durch den Zentralpunkt und den Punkt $P_{Design}$ verläuft. Die Koordinate $\rho$ bezeichnet dann den Abstand des Punkts $P_{Design}$ vom Zentralpunkt.

Für die erste Interpolation kann zum Beispiel gelten:

$$D^j(P_{Durchstoß}) = D^j(P_{NL1}) + \frac{D^j(P_{NL2}) - D^j(P_{NL1})}{(\varphi_{NL2} - \varphi_{NL1})}(\varphi - \varphi_{NL1}).$$

Für die zweite Interpolation kann zum Beispiel gelten:

$$D^{j}(P_{Design}) = D^{j}(P_{Durchstoß}) + \frac{D^{j}(P_{Zentral}) - D^{j}(P_{Durchstoß})}{\rho}(\rho_S - \rho_i)$$

oder

$$D^{j}(P_{Design}) = D^{j}(P_{Durchstoß}) + (D^{j}(P_{Zentral}) - D^{j}(P_{Durchstoß}))(1 - \alpha).$$

Dabei bezeichnen:

$(\varphi,\rho)$ die Polarkoordinaten des Punkts $P_{Design}$;
$(\varphi_{NL1},\rho_{NL2})$ und $(\varphi_{NL2},\rho_{NL2})$ die Polarkoordinaten der beiden nächstliegenden Punkte $P_{NL1}$ und $P_{NL2}$, wobei die Bedingung $\varphi_{NL1} \leq \varphi \leq \varphi_{NL2}$ gilt;
$\rho_S$ den Abstand des Punkts $P_{Durchstoß}$ von dem Zentralpunkt $P_{Zentral}$;
$D^{j}(P_{NL1})$ und $D^{j}(P_{NL2})$ jeweils Werte des Designparameters $D^{j}$ an den Punkten $P_{NL1}$ bzw. $P_{NL2}$, wobei die Punkte $P_{NL1}$ und $P_{NL2}$ die dem Punkt $P_{Design}$ nächstliegenden Punkte darstellen, zu welchen die Designparameter $D^{j}$ vorgegeben sind; und
$D^{j}(P_{Zentral})$ den Wert des Designparameters $D^{j}$ in dem Zentralpunkt $P_{Zentral}$.

Es ist somit möglich, schnell und effizient das zu bestimmende Design zu ermitteln und anschließend ein Brillenglas mit dem ermittelten Design zu berechnen bzw. zu optimieren und herzustellen.
Die Designparameter $D^{j}$ können einen oder mehrere der folgenden Parameter umfassen:

- Gewichtung des Fernteils;
- Gewichtung des Nahteils;
- Gewichtung des Progressionsteils;
- Gewichtung Dynamik;
- Anwendungsschwerpunkte des Brillenglases;
- Parameter, welche die Lage des Fern-, Nah- und/oder Progressionsteils bestimmen;
- räumliche Position des Fern- und/oder des Nahbezugs- bzw. Designpunkts;
- Parameter, welche den Verlauf der Objektabstandsfunktion bestimmen;
- Parameter, welche den Verlauf einer oder mehrerer Sollisoastigmatismuslinien bestimmen;
- maximal zulässige Abbildungsfehler, insbesondere maximal zulässiger Refraktionsfehler, und/oder maximal zulässiger Astigmatismusfehler, und/oder maximal zulässiger Astigmatismusgradient.

Jede Kombination von Designparametern kann ein Design eines progressiven Brillenglases bestimmen. Das Design (Sollastigmatismusverteilung, Verteilung des Sollbrechwerts bzw. Verteilung des Soll-Refraktionsfehlers, usw.), welches der jeweiligen Kombination von Designparametern entspricht, kann vorab berechnet und zum Beispiel in einer Datenbank abgelegt werden. Es ist jedoch ebenfalls möglich, das Design (Sollastigmatismusverteilung, Verteilung des Sollbrechwerts bzw. Verteilung des Soll-Refraktionsfehlers, usw.) automatisch anhand der Designparameter zu berechnen. Die Anmeldungen WO 2008/089998 und WO 2008/089995 beschreiben Verfahren sowie Vorrichtungen zur Erfassung und/oder Berechnung der Designparameter anhand von erfassten Kundendaten (Daten des Brillenträgers). Die Designparameter steuern dann das Design des Brillenglases. Ein Verfahren zum Ermitteln bzw. Berechnen eines Designs mittels einer Transformation eines vorgegebenen Startdesigns in Abhängigkeit von erfassten individuellen Designparametern, insbesondere der räumlichen Position des Fern- und/oder Nahbezugspunkts, ist zum Beispiel in der Anmeldung WO 2008/089996 beschrieben.
Gemäß einem Aspekt der Erfindung wird eine Vorrichtung zum Ermitteln bzw. Berechnen von Designparametern $D^{j}$, $j=1,...,M$ eines Designs für ein progressives Brillenglas vorgeschlagen. Die Vorrichtung umfasst:

- Designvieleck-Speichermittel, welche ausgelegt sind, Daten eines vorgegebenen Designvielecks zu speichern, wobei jeder Punkt $P$ innerhalb des Designvielecks jeweils ein Design bezeichnet bzw. bestimmt und das Design an dem Punkt $P$ durch Designwerte $D^{j}(P)$ charakterisiert ist;

- Designparameterberechnungsmittel, welche ausgelegt sind, ein bevorzugtes Verfahren zum Ermitteln bzw. Berechnen der Designparameter $D^j$, $j = 1 \ldots M$, des zu berechnenden Designs anhand des gespeicherten vorgegebenen Designvielecks durchzuführen.

Insbesondere umfassen die Designvieleck-Speichermittel:

- Eckdesign-Speichermittel zum Speichern der Designwerte $D^j(P_{Eck})$, $j =1,\ldots, M$ der Designparameter, welche das Design an dem jeweiligen Eckpunkt $P_{Eck}$ des Designvielecks charakterisieren, und
- optional zusätzliche Speichermittel zum Speichern der Werte $D^j(P_{Zusatz})$ der Designparameter, welche das Design an zumindest einem zusätzlichen Punkt $P_{Zusatz}$ innerhalb des Designvielecks charakterisieren.

Die Designparameterberechnungsmittel können mittels entsprechend konfigurierter bzw. programmierter herkömmlicher Computer, spezialisierter Hardware und//oder Computernetzen bzw. Computersystemen implementiert werden. Die Designparameterberechnungsmittel können mittels geeigneter Schnittstellen in einer Signalverbindung mit den Designvieleck-Speichermitteln stehen und insbesondere die in den Designvieleck-Speichermitteln (umfassend Eckdesign-Speichermittel und optional zusätzlichen. Speichermittel) gespeicherten Daten auslesen und/oder modifizieren. Die Designparameterberechnungsmittel können ferner eine interaktive grafische Benutzerschnittstelle (GUI) umfassen, welche es einem Benutzer ermöglicht, die Position des Designs innerhalb des Designvielecks und/oder einen oder mehreren, einem Design zugeordneten Designparameter interaktiv zu verändern.

Gemäß einem weiteren Aspekt, wird ein Computerprogrammerzeugnis (d.h. ein in der Patentanspruchskategorie einer Vorrichtung beanspruchtes Computerprogramm) oder ein Speichermedium mit einem darauf gespeicherten Computerprogramm vorgeschlagen, wobei das Computerprogrammerzeugnis oder das Computerprogramm ausgelegt ist, wenn geladen und ausgeführt auf einem Computer, ein bevorzugtes Verfahren zum Ermitteln bzw. Berechnen der Designparameter $D^j$, $j =1,\ldots,M$, eines Designs für ein progressives Brillenglas durchzuführen.

Gemäß einem weiteren Aspekt wird ein computergestütztes Verfahren zum Ermitteln bzw. Berechnen eines Designs für ein progressives Brillenglas anhand eines vorgegebenen Designvielecks sowie entsprechende Computerprogrammerzeugnisse und Speichermedien vorgeschlagen, wobei:

- jeder Punkt $P$ innerhalb des Designvielecks jeweils ein Design bezeichnet bzw. bestimmt und das Design an dem Punkt $P$ durch Designwerte $D^j(P)$ charakterisiert ist;
- Designwerte $D^j(P_{Eck})$, $j=1,\ldots,M,$ der Designparameter, welche das Design an jeweiligen Eckpunkten $P_{Eck}$ des Designvielecks charakterisieren, vorgegeben bzw. vorgebbar sind; und
- optional die Werte $D^j(P_{Zusatz})$ der Designparameter, welche das Design an zumindest einem zusätzlichen Punkt $P_{Zusatz}$ innerhalb des Designvielecks charakterisieren, vorgegeben bzw. vorgebbar sind;

wobei das Verfahren umfasst:

- Ermitteln bzw. Berechnen der Designparameter für ein progressives Brillenglas nach einem bevorzugen Verfahren zum Ermitteln bzw. Berechnen der Designparameter eines Designs für ein progressives Brillenglas;
- Berechnen eines Designs anhand der ermittelten Designparameter.

Insbesondere umfasst das Berechnen bzw. Ermitteln eines Designs das Ermitteln bzw. Berechnen von räumlichen Verteilungen von Sollwerten einer oder mehrerer Abbildungseigenschaften oder Abbildungsfehler des zu berechnenden Brillenglases, insbesondere die Sollastigmatismusverteilung. Die einer Kombination von Werten der Designparameter entsprechenden Verteilungen der Sollwerte können vorab berechnet und zum Beispiel in einer Datenbank abgespeichert werden.

Wie bereits oben ausgeführt ist ein Verfahren zum Ermitteln bzw. Berechnen eines Designs mittels einer Transformation eines vorgegebenen Startdesigns in Abhängigkeit von erfassten individuellen Designparametem, insbesondere der räumlichen Position des Fern- und/oder Nahbezugspunkts, zum Beispiel in der Anmeldung WO 2008/089996 beschrieben. Ein weiteres Verfahren zum Ermitteln bzw. Berechnen eines Designs in Abhängigkeit von Designparameter, insbesondere eine Gewichtung des Fern- und/oder Nahteils ist zum Beispiel in DE 10 2009 005 206.2 oder in DE 10 2009 005 214.3 beschrieben. Eine Transformation einer vorgegebenen Sollastigmatismusverteilung mit einer Basisaddition $Add_B$ mittels einer Multiplikation mit einem Skalierungsfaktor s ist in der Patentanmeldung DE 10 2008 015 189.0 beschrieben.

Das ermittelte oder berechnete Design kann ein Brillenglasdesign für ein progressives Brillenglas mit einer objektseitigen oder vorzugsweise augenseitigen progressiven Fläche sein. Die gegenüberliegende Fläche kann vorzugsweise eine einfache sphärische oder rotationssymmetrisch asphärische Fläche sein. Ebenfalls ist es möglich, nach dem oben beschriebenen Verfahren ein Design für ein doppelprogressives Brillenglas zu berechnen bzw. zu erzeugen.

Das erfindungsgemäße Verfahren zum Ermitteln bzw. Berechnen eines Designs für ein progressives Brillenglas eignet sich sowohl für das Erzeugen von Designs bzw. Designvarianten für konventionelle oder wirkungsoptimierte progressive Brillengläser, als auch für das Erzeugen von Designs bzw. Designvarianten für individuell optimierte progressive Brillengläser.

Das Verfahren zum Ermitteln bzw. Berechnen eines Designs für ein progressives Brillenglas kann ferner ein Abändern des ermittelten Designs umfassen, wobei das Abändern vorzugsweise interaktiv in einem Dialog mit einem Benutzer und/oder automatisch anhand von individuellen Daten und/oder Präferenzen eines Brillenträgers erfolgt. Das berechnete Design kann ferner weiter transformiert und/oder skaliert werden, zum Beispiel um die Lage der Design- bzw. Bezugspunkte abzuändern und/oder die Objektentfernungen in den Design- bzw. Bezugspunkten anzupassen. Ferner können vorab Grenzen der möglichen und/oder erwünschten Designmodifikation festgelegt werden.

Ebenfalls kann das Verfahren ein Visualisieren der räumlichen Lage des abgeänderten Designs innerhalb des Designvielecks umfassen. Dies kann zum Beispiel mittels geeigneter graphischer Benutzerschnittstellen erfolgen.

Ein weiterer Aspekt der Erfindung betrifft eine Vorrichtung zum Ermitteln bzw. Berechnen eines Designs für ein progressives Brillenglas, umfassend:

- Designvieleck-Speichermittel zum Speichern von Daten eines vorgegebenen Designvielecks, wobei jeder Punkt $P$ innerhalb des Designvielecks jeweils ein Design bezeichnet bzw. bestimmt und das Design an dem Punkt $P$ durch Designwerte $D^j(P)$ charakterisiert ist; wobei die Designvieleck-Speichermittel umfassen:

  - Eckdesign-Speichermittel zum Speichern der Designwerte $D^j(P_{Eck})$, $j =1,...,M$ der Designparameter, welche das Design an dem jeweiligen Eckpunkt $P_{Eck}$ des Designvielecks charakterisieren, und
  - optional zusätzliche Speichermittel zum Speichern der Werte $D^j(P_{Zusatz})$ der Designparameter, welche das Design an zumindest einem zusätzlichen Punkt $P_{Zusatz}$ innerhalb des Designvielecks charakterisieren;

- Designberechnungsmittel, welche ausgelegt sind, ein Design für das progressive Brillenglas nach einem bevorzugten Verfahren zum Erzeugen bzw. Berechnen eines Designs für ein progressives Brillenglas zu berechnen.

Ferner umfassen die Designberechnungsmittel Designparameterberechnungsmittel, welche ausgelegt sind, ein bevorzugtes Verfahren zum Ermitteln bzw. Berechnen der Designparameter $D^j$, $j=1...M$, des zu berechnenden Designs anhand des gespeicherten vorgegebenen Designvielecks durchzuführen. Die Designberechnungsmittel sind vorzugsweise ausgelegt, ein Design für das progressive Brillenglas nach einem bevorzugten Verfahren zum Erzeugen bzw. Berechnen eines Designs für ein progressives Brillenglas in Abhängigkeit von den ermittelten bzw. berechneten Designparametern zu berechnen.

Die Designberechungsmittel sowie die Designparameterberechnungsmittel können mittels geeignet konfigurierten bzw. programmierten Computern, spezialisierter Hardware und/oder Computernetzen bzw. Computersystemen und so weiter implementiert werden.

Ein weiterer Aspekt der Erfindung betrifft ein computergestütztes Verfahren zum Herstellen eines progressiven Brillenglases umfassend:

- Ermitteln bzw. Berechnen eines Designs für ein progressives Brillenglas gemäß einem bevorzugten Verfahren zum Ermitteln bzw. Berechnen eines Designs für ein progressives Brillenglas anhand eines vorgegebenen Designvielecks;
- Berechnen bzw. Optimieren des Brillenglases nach dem berechneten Brillenglasdesign.

Das Berechnen bzw. Optimieren des Brillenglases kann zum Beispiel eine Minimierung der Zielfunktion:

$$F(\vec{x}) = \sum_{i=1}^{m} \left[ g_{i,Ast}(Ast_i - Ast_{i,Soll})^2 + ... \right]$$

umfassen, wobei

$Ast_{i,Soll}$   den Sollwert der lokalen astigmatischen Abweichung bzw. des lokalen astigmatischen Fehlers an der $i$-ten Bewertungsstelle;

$Ast_i$   den tatsächlichen Wert der lokalen astigmatischen Abweichung bzw. des lokalen astigmatischen Fehlers an der $i$-ten Bewertungsstelle;

$g_{i,Ast}$   die lokale Gewichtung der astigmatischen Abweichung bzw. des lokalen astigmatischen Fehlers an der $i$-ten Bewertungsstelle

bezeichnen.

Ferner bevorzugt geht in die Zielfunktion ebenfalls der Refraktionsfehler $\Delta R$ ein, so dass das Berechnen bzw. Optimieren des Brillenglases eine Minimierung der Zielfunktion:

$$F(\bar{x}) = \sum_{i=1}^{m} \left[ g_{i,\Delta R}(\Delta R_i - \Delta R_{i,Soll})^2 + g_{i,Ast}(Ast_i - Ast_{i,Soll})^2 + ... \right]$$

umfasst, wobei

$\Delta R_{i,Soll}$     den Sollwert des lokalen Refraktionsfehlers an der $i$-ten Bewertungsstelle;

$\Delta R_i$     den tatsächlichen Wert des lokalen Refraktionsfehlers an der $i$-ten Bewertungsstelle;

$g_{i,\Delta R}$     die lokale Gewichtung der Refraktionsfehlers an der $i$-ten Bewertungsstelle

bezeichnen.

In den obigen Formeln bezeichnet $Ast_{i,soll}$ die dem zuvor berechneten Design für ein progressives Brillenglas zugeordnete lokale astigmatische Abweichung $Ast_{i,soll}$ und $\Delta R_{i,Soll}$ den dem zuvor berechneten Design für ein progressives Brillenglas zugeordneten Sollwert des lokalen Refraktionsfehlers $\Delta R_{i,Soll}$.

Das Berechnen bzw. Optimieren des Brillenglases kann ferner unter Berücksichtigung von individuellen Daten des Brillenträgers erfolgen. Die individuellen Daten des Brillenträgers können individuelle Parameter des Brillenträgers und/oder individuelle Parameter der Gebrauchsstellung des Brillenglases bzw. der Brille vor den Augen des Brillenträgers umfassen. Die durchschnittlichen oder individuellen Parameter des Brillenträgers und/oder der Gebrauchsstellung des Brillenglases können insbesondere die Pupillendistanz (PD), den Hornhautscheitelabstand (HSA), die Vorneigung (VN), den Fassungsscheibenwinkel (FSW), etc. umfassen.

Das Berechnen und Optimieren des Brillenglases kann ferner Bereitstellen von Flächendaten des berechneten Brillenglases umfassen, insbesondere Bereitstellen von Flächendaten der zumindest einen progressiven Fläche des Brillenglases. Das Verfahren zum Herstellen eines Progressiven Brillenglases kann ferner einen Schritt der Fertigung oder des fertig-Bearbeitens des Brillenglases nach den Flächendaten umfassen. Die Fertigung kann mittels CNC Maschinen, Gussverfahren, einer Kombination der beiden Verfahren oder mittels anderer geeigneter Verfahren erfolgen.

Gemäß einem Aspekt der Erfindung wird eine Vorrichtung zum Herstellen eines progressiven Brillenglases vorgeschlagen, umfassend:

- Designberechnungsmittel, welche ausgelegt sind, ein Design für das progressive Brillenglas nach dem einen bevorzugten Verfahren zum Erzeugen bzw. Berechnen eines progressiven Brillenglasdesigns zu berechnen; und
- Optimierungs- bzw. Berechnungsmittel, welche ausgelegt sind, ein Berechnen bzw. Optimieren des Brillenglases nach dem berechneten Design durchzuführen.

Die Optimierungs- bzw. Berechnungsmittel zum Optimieren eines Brillenglases sowie die Designberechnungsmittel können mittels geeignet konfigurierter bzw. programmierter Computer, spezialisierter Hardware und/oder Computernetzen bzw. Computersystemen und so weiter implementiert werden. Es ist möglich, dass der gleiche Computer bzw. das gleiche Computersystem derart konfiguriert bzw. programmiert ist, sowohl die Berechnung des Designs für das Brillenglas als auch die Berechnung bzw. Optimierung des Brillenglases nach dem berechneten Design durchzuführen. Es ist jedoch selbstverständlich möglich, dass die Berechnung des Designs und die Berechnung des Brillenglases nach dem berechneten Design in separaten Recheneinheiten, beispielsweise in separaten Computern oder Computersystemen erfolgen. Die Optimierungs- bzw. Berechnungsmittel können in Signalverbindung mit Speichermitteln stehen, welche individuelle Daten des Brillenträgers temporär oder permanent speichern.

Ferner kann die Vorrichtung zum Herstellen eines progressiven Brillenglases Bearbeitungsmittel zum fertig-Bearbeiten des Brillenglases umfassen. Die Bearbeitungsmittel können zum Beispiel CNC gesteuerte Maschinen zur Direktbearbeitung eines Blanks nach den ermittelten Optimierungsvorgaben umfassen. Vorzugsweise weist das fertig bearbeitete Brillenglas eine einfache sphärische oder rotationssymmetrisch asphärische Fläche und eine nach den erfindungsgemäß berechneten Designvorgaben sowie individuellen Parametern des Brillenträgers optimierte progressive Fläche auf. Vorzugsweise ist die sphärische oder rotationssymmetrisch asphärische Fläche die Vorderfläche (d.h. die objektseitige Fläche) des Brillenglases. Selbstverständlich ist es jedoch möglich, die nach dem berechneten Design optimierte Fläche als Vorderfläche des Brillenglases anzuordnen. Ebenfalls ist es möglich, dass beide Flächen des Brillenglases progressive Flächen sind.

Ebenfalls kann die Vorrichtung zum Herstellen eines progressiven Brillenglases Erfassungsmittel zum Erfassen von individuellen Daten des Brillenträgers umfassen. Die Erfassungsmittel können insbesondere grafische Benutzerschnittstellen umfassen.

Ferner werden ein Computerprogrammerzeugnis sowie ein Speichermedium mit darauf gespeichertem Computerprogramm vorgeschlagen, wobei das Computerprogrammerzeugnis oder das Computerprogramm ausgelegt ist, wenn geladen und ausgeführt auf einem Computer, ein Verfahren zum Berechnen und Optimieren eines progressiven Brillenglases durchzuführen, wobei das Verfahren folgende Schritte umfasst:

- Berechnen eines Designs für das progressive Brillenglas nach einem bevorzugten Verfahren zum Erzeugen bzw. Berechnen eines progressiven Brillenglasdesigns;
- Berechnen bzw. Optimieren des progressiven Brillenglases nach dem berechneten Design.

Wie bereits oben ausgeführt wurde, ermöglicht die Verwendung eines Designvielecks eine einfache und intuitive Darstellung bzw. Visualisierung von komplexen Eigenschaften progressiver Designs, welche durch eine Vielzahl unterschiedlicher und einem Benutzer zum Teil schwer zugänglicher Kombinationen von Designparametern charakterisiert ist.

Ein computergestütztes Verfahren zur Visualisierung eines Designs für ein progressives Brillenglas anhand eines vorgegebenen Designvielecks sowie entsprechende Computerprogrammerzeugnisse und Speichermedien vorgeschlagen, wobei:

- jeder Punkt $P$ innerhalb des Designvielecks jeweils ein Design bezeichnet bzw. bestimmt und das Design an dem Punkt $P$ durch Designwerte $D^j(P)$ charakterisiert ist;
- Designwerte $D^j(P_{Eck})$, $j=1,...,M$, der Designparameter, welche das Design an jeweiligen Eckpunkten $P_{Eck}$ des Designvielecks charakterisieren, vorgegeben bzw. vorgebbar sind;
- optional die Werte $D^j(P_{Zusatz})$ der Designparameter, welche das Design an zumindest einem zusätzlichen Punkt $P_{Zusatz}$ innerhalb des Designvielecks charakterisieren , vorgegeben bzw. vorgebbar sind; umfasst die Schritte.
- Vorgeben von Designparametern bzw. Werten der Designparameter des zu visualisierenden Designs;
- Ermitteln der räumlichen Lage eines Punkts $P_{Design}$ innerhalb des Designndreiecks, welcher der vorgegebenen Kombination von Designparametern bzw. den Werten der Designparameter des zu visualisierenden Designs entspricht;
- Visualisieren der räumlichen Lage des ermittelten Punkts $P_{Design}$, welcher das Design bestimmt, innerhalb des Designvielecks.

Das Visualisieren der räumlichen Lage des ermittelten Punkts $P_{Design}$ kann mittels geeigneter, vorzugsweise interaktiver, graphischer Benutzerschnittstellen (GUI) erfolgen. Dank der einfachen und intuitiven Darstellung eines Designs als Punkt innerhalb eines Designvielecks, wird die Interaktion eines Benutzers (zum Beispiel eines Konstrukteurs oder eines Augenoptikers) über eine entsprechende Vorrichtung erheblich vereinfacht und der Designauffindungsprozeß erheblich erleichtert, beschleunigt und verbessert.

Das Verfahren zur Visualisierung eines Designs für ein progressives Brillenglas kann ferner einen Schritt des Bestimmens in Abhängigkeit von der visualisierten räumlichen Lage des ermittelten Punkts $P_{Design}$ des Designs, ob das Design ohne Modifikation angenommen werden kann oder ob das Design zu modifizieren ist, umfassen.

Ferner kann das Verfahren zur Visualisierung eines Designs für ein progressives Brillenglas Modifikation eines oder mehrerer Designparameter, Ermitteln der räumlichen Lage eines Punkts $P'_{Design}$ innerhalb des Designndreiecks, welcher der modifizierten Kombination von Designparametern bzw. den Werten der modifizierten Designparameter entspricht, und Visualisieren der räumlichen Lage des ermittelten Punkts $P'_{Design}$, welcher das modifizierte Design bestimmt, innerhalb des Designvielecks aufweisen.

Die Designparameter des zu visualisierenden Designs können Gewichtungen $g_n$, $n =1,..., N$ jedes der Designs in den Eckpunkten $P_{Eck}$ umfassen. Die senkrechten Abstände $a_n$, $n=1,...,N$ des zu ermittelnden Punkts $P_{Design}$ von der jeweiligen Seitenkante des Designvielecks können nach der Formel:

$$a_n = \frac{k}{\sum\limits_{n=1}^{N} g_n} g_n, \; n = 1...N$$

berechnet werden, wobei:

*k* eine vorgegebene Zahl ist und vorzugsweise *k* =100 gilt.

Eine Vorrichtung zur Visualisierung eines Designs für ein progressives Brillenglas umfasst:

- Designvieleck-Speichermittel zum Speichern von Daten eines vorgegebenen Designvielecks, wobei jeder Punkt P innerhalb des Desigrivielecks jeweils ein Design bezeichnet bzw. bestimmt und das Design an dem Punkt *P* durch Designwerte $D^j(P)$ charakterisiert ist; wobei die Designvieleck-Speichermittel umfassen:

  - Eckdeslgn-Speichermittel zum Speichern der Designwerte $D^j(P_{Eck})$, *j* =1,...,*M* der Designparameter, welche das Design an dem jeweiligen Eckpunkt $P_{Eck}$ des Designvielecks charakterisieren, und
  - optional zusätzliche Speichermittel zum Speichern der Werte $D^j(P_{Zusatz})$ der Designparameter, welche das Design an zumindest einem zusätzlichen Punkt $P_{Zusatz}$ innerhalb des Designvielecks charakterisieren,

- zumindest einen Designparameter-Eingabeabschnitt, welcher ausgelegt ist, Designparameter bzw. Werte der Designparameter des zu visualisierenden Designs einzugeben;
- Berechnungsmittel, welche ausgelegt sind, die räumliche Lage eines Punkts $P_{Design}$ innerhalb des Designdreiecks zu ermitteln, wobei der Punkt $P_{Design}$ der vorgegebenen Kombination von Designparametern bzw. den Werten der Designparameter des zu visualisierenden Designs entspricht;
- zumindest einen Anzeigeabschnitt, welcher ausgelegt ist, die berechnete Position des ermittelten Punkts $P_{Design}$ innerhalb des Designvielecks zu visualisieren.

Eine grafische Benutzerschnittstelle zur Visualisierung eines Designs für ein progressives Brillenglas, wobei das Design als Punkt innerhalb eines vorgegebenen Designvielecks visualisiert wird, umfasst:

- zumindest einen Designparameter-Eingabeabschnitt, welcher ausgelegt ist, Designparameter bzw. Werte der Designparameter des zu visualisierenden Designs einzugeben;
- zumindest einen Designvieleck-Anzeigeabschnitt, welcher ausgelegt ist, die räumliche Lage eines Punkts $P_{Design}$ innerhalb eines vorgegebenen Designvielecks zu visualisieren, wobei

  - der Punkt $P_{Design}$ der vorgegebenen Kombination von Designparametern bzw. den Werten der Designparameter des zu visualisierenden Designs entspricht;
  - jeder Punkt *P* innerhalb des Designvielecks jeweils ein Design bezeichnet bzw. bestimmt und das Design an dem Punkt *P* durch Designwerte $D^j(P)$ charakterisiert ist;
  - Designwerte $D^j(P_{Eck})$, *j* = 1,...,*M* , der Designparameter, welche das Design an jeweiligen Eckpunkten $P_{Eck}$ des Designvielecks charakterisieren, vorgegeben bzw. vorgebbar sind; und wobei
  - optional die Werte $D^j(P_{Zusatz})$ der Designparameter, welche das Design an zumindest einem zusätzlichen Punkt $P_{Zusatz}$ innerhalb des Designvielecks charakterisieren, vorgegeben bzw. vorgebbar sind.

Weitere Vorteile und Merkmale der vorliegenden Erfindung werden nachfolgend anhand begleitender Zeichnungen bevorzugter Ausführungsformen beispielhaft beschrieben, wobei Merkmale, welche in Bezug auf separate Ausführungsbeispiele gezeigt werden, beliebig miteinander kombiniert werden können um neue Ausführungsbeispiele zu bilden. Es zeigt:

Fig. 1          Beispiel eines erfindungsgemäßen Designdreiecks;
Fig. 2          beispielhafte tabellarische Aufstellung der vorgegebenen Werte der Designparameter;
Fig. 3          ein weiteres Beispiel eines erfindungsgemäßen Designdreiecks;
Fig. 4          eine weitere beispielhafte tabellarische Aufstellung der vorgegebenen Designparameter;
Fig. 5a         Beispiel einer graphischen Benutzerschnittstelle zur Visualisierung eines Designdreiecks und gegebenenfalls Modifikation des Designs, welches einem Punkt innerhalb des Designdreiecks zugeordnet ist;
Fig. 5b         vergrößerte Ansicht des in Fig. 5a gezeigten Designdreiecks;
Fig. 6 bis 8    Beispiele von graphischen Benutzerschnittstellen gemäß bevorzugter Ausführungsformen der Erfindung;
Fig. 9          Beispiele unterschiedlicher erfindungsgemäßer Designs innerhalb eines Designdreiecks;
Fig. 10         Beispiele von drei unterschiedlichen Designs innerhalb eines Designdreiecks;
Fig. 11         Beispiel einer graphischen Benutzerschnittstelle zur Eingabe von Daten des progressiven Brillenglases und des Brillenträgers;
Fig. 12         Beispiel einer graphischen Benutzerschnittstelle "Designoptimterer" (nachfolgend auch genannt "Design Profiler");

Fig. 13 bis 15 Beispiele von graphischen Benutzerschnittstellen;

Fig. 16 Beispiel der Stempelung eines individuellen Brillenglases.

Eine einfache aber äußerst eindrucksvolle Methode zur Designvisualisierung und Designvariation unter Berücksichtigung von mindestens drei ausgewählten Anwendungsschwerpunkten kann mittels der Lage eines Punktes in einem vorzugsweise gleichseitigen Dreieck, dem Designdreieck, erfolgen.

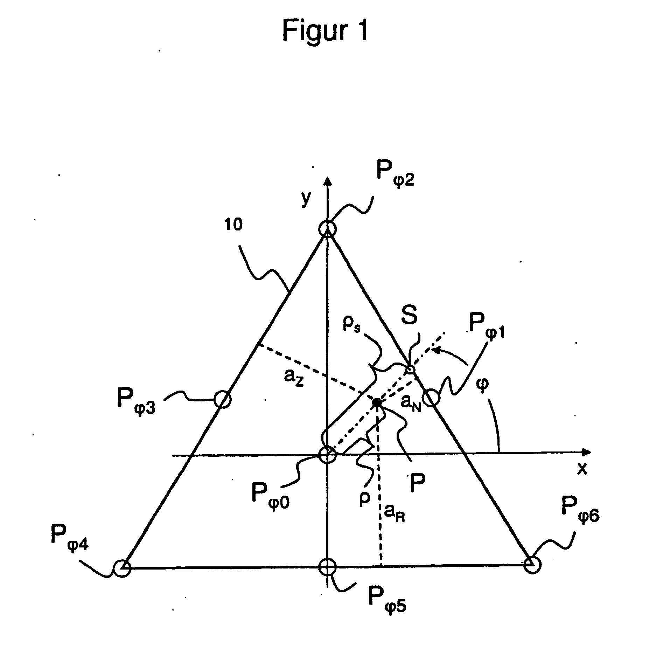

Fig.1 zeigt beispielhaft ein derartiges Designdreieck. In Fig. 1 bezeichnen:

Punkt $P = P(x,x) = P_{Design}$ einen beliebigen Punkt innerhalb des Designdreiecks 10, an dem die Werte der Designparameter zu bestimmen sind.

Punkt $S = S(x_S, y_S) = P_{Durchstoß}$ den Schnittpunkt der Gerade, welche durch den Zentralpunkt $P_{\varphi 0} = P_{\varphi 0}(0,0)$ und den Punkt $P = P(x, y)$ verläuft, in Richtung des Vektors $P_{\varphi 0}P$ und der Seitenkante des Designdreiecks 10, wobei der Punkt $P_{\varphi 0}$ den Start und Punkt $P = P(x, y)$ das Ende des Vektors $P_{\varphi 0}P$ angibt;

$P_{\varphi 0} = P_{Zentral} = (0,0)$ den Zentralpunkt des Designdreiecks 10;

Punkte $P_{\varphi 2} = P_{\varphi 2}(x_2,y_2)$, $P_{\varphi 4} = P_{\varphi 4}(x_4,y_4)$, $P_{\varphi 6} = P_{\varphi 6}(x_6,y_6)$ den jeweiligen Eckpunkt ($P_{Eck1}$, $P_{Eck2}$, $P_{Eck3}$)) des Designdreiecks; und

Punkte $P_{\varphi 1} = P_{\varphi 1}(x_1,y_1)$, $P_{\varphi 3} = P_{\varphi 3}(x_3,y_3)$ und $P_{\varphi 5} = P_{\varphi 5}(x_5,y_5)$ den jeweiligen Zusatzpunkt ($P_{Zusatz1}$, $P_{Zusatz2}$, $P_{Zusatz3}$)) , an welchem die Werte der Parameter des jeweiligen Designs vorgegeben sind.

In Fig. 1 fällt der Punkt $P_{\varphi 0} = P_{\varphi 0}(0,0)$ mit dem Ursprung des Koordinatensystems {x,y} und mit dem Schwerpunkt des Designdreiecks 10 zusammen. Die Achse "x" des Koordinatensystems ist parallel zu einer der Seitenkanten des Designdreiecks 10, in dem vorliegenden Fall parallel zu der Seitenkante $P_{\varphi 4}P_{\varphi 6}$. Die Achse "y" ist senkrecht zu der Achse "x". Dem Zentralpunkt wird ein Grunddesign mit vorgegebenem Designparameter "D$^j$", wobei j eine ganze Zahl von 1 bis M ist, zugeordnet.

Der Winkel $\varphi$ ist der Winkel zwischen dem Vektor von dem Zentralpunkt $P_{\varphi 0}(0,0)$, welcher zum Beispiel mit dem Dreieckmittelpunkt übereinstimmt, zu einem beliebigen Punkt $P$ innerhalb des Designdreiecks und der X-Achse. Der Abstand $\rho$ ist der Abstand zwischen dem Zentralpunkt und dem Punkt P. Die Ausprägung $\alpha$ ist das Verhältnis des Abstandes zwischen dem Zentralpunkt $P_{\varphi 0}$ und dem Punkt P und dem Abstand ($\rho_S$) zwischen dem Zentralpunkt und dem Schnittpunkt S. Wenn die Ausprägung $\alpha = 0$ ist, befindet sich der Punkt P im Zentrum, d.h. fällt mit dem Zentralpunkt $P_{\varphi 0}$ zusammen. Wenn die Ausprägung $\alpha = 1$ ist, liegt der Punkt auf der Dreiecksseite bzw. auf der Seitenkante des Designdreiecks 10.

Die Punkte $P_{\varphi 1}$ bis $P_{\varphi 6}$ (auch Rand- oder Grenzpunkte genannt) können, wie bei dem in Fig. 1 gezeigten Ausführungsbeispiel, auf einem gleichseitigen Dreieck liegen, wobei dies jedoch nicht als eine notwendige Eigenschaft anzusehen ist. Die Punkte können auch ein allgemeines N-Eck beschreiben, so dass statt des Designdreiecks ein Design-N-Eck vorgegeben wird.

Jedem der Rand- bzw. Grenzpunkte Punkt $P_{\varphi 1}$ bis $P_{\varphi 6}$ wird, ausgehend von dem Zentralpunkt $P_{\varphi 0}$, genau ein Wert des betrachteten Designparameters "D" zugeordnet. Bezeichnet D einen beliebigen Designparameter des Grunddesigns, dann bezeichnen D($P_{\varphi 0}$) bis D($P_{\varphi 6}$) die zugehörigen Designparameter in den Punkten $P_{\varphi 0}$ bis $P_{\varphi 6}$. Die Werte D($P_{\varphi 1}$) bis D($P_{\varphi 6}$) für die Rand- bzw. Grenzpunkte $P_{\varphi 1}$ bis $P_{\varphi 6}$ können direkt vorgegeben werden. Aus diesen Punkten kann durch einfache Interpolationsroutinen der Wert des Designparameters D für einen beliebigen Punkt $P = P(x, y)$ berechnet werden.

Die einfachste Interpolation ist die lineare Interpolation. Eine beispielhafte lineare Interpolation kann wie folgt erfolgen:

Zunächst werden die zwei Eck- bzw. Randpunkte des Designdreiecks 10 bestimmt, welche mit dem Zentralpunkt $P_{\varphi 0}$ ein Dreieckssegment aufspannen, innerhalb von welchem der Punkt P liegt. In Fig. 1 sind das die Punkte $P_{\varphi 0}$, $P_{\varphi 1}$ und $P_{\varphi 2}$. Anders ausgedrückt wird zunächst der Sektor des Designdreiecks gesucht, welcher durch den Zentralpunkt $P_{\varphi 0}$ und zwei der Randpunkte $P_{\varphi 1}$ bis $P_{\varphi 6}$ definiert ist, und in welchem der Punkt P liegt. Trägt man gedanklich an diesen Punkten als dritte Koordinate (z-Richtung, senkrecht zur Zeichenebene von Fig. 1) die zugehörigen Designwerte auf, dann wird dadurch eine Ebene aufgespannt. Der Wert in z-Richtung, der zu den Koordinaten von P(x,y) gehört, ist dann der Designwert, der dem Punkt P zugeordnet wird.

Dies kann zum Beispiel durch zweimalige, abschnittsweise lineare Interpolation mit den folgenden Schritten erfolgen:

1) Berechnen der Polarkoordinaten des Punktes P. Das sind die Polarkoordinaten $\varphi, \rho$.

2) Berechnen der Polarkoordinaten der Randpunkte $P_{\varphi 1}$ bis $P_{\varphi 6}$: $\varphi_1, ..., \varphi_6$.

3) Suchen, zwischen welchen vorgegebenen Werten $\varphi_i$ und $\varphi_{i+1}$ der Winkel $\varphi$ liegt: $\varphi_i \leq \varphi < \varphi_{i+1}$, wobei $\varphi_i$ und $\varphi_{i+1}$ die Winkelkoordinaten der beiden Randpunkte $P_{\varphi i}$ und $P_{\varphi i+1}$, welche am nächsten an Punkt S liegen, bezeichnen. Anders ausgedrückt umfasst dieser Schritt ein Ermitteln der beiden nächstliegenden Punkte $P_{NL1}$ ($=P_{\varphi i}$) und $P_{NL2}$ ($= P_{\varphi i+1}$) auf der Seitenkante des Designvielecks, auf welcher auch der Durchstoßpunkt $P_{Durchstoß}$ liegt.

4) Berechnen des Werts des Designparameters $D_S$ am Rand- bzw. Grenzpunkt S:

$$D_S = D_i + \frac{D_{i+1} - D_i}{\varphi_{i+1} - \varphi_i}(\varphi - \varphi_i).$$

5) Berechnen der Ausprägung $\alpha = \dfrac{\rho}{\rho_s}$.

6) Berechnen des Werts des Designparameters D am Punkt P durch lineare Interpolation nach $\rho$ oder $\alpha$

$$D_P = D_S + \frac{D_0 - D_S}{\rho_S}(\rho_S - \rho) = D_S + (D_0 - D_S)(1 - \alpha).$$

In den obigen Formeln bezeichnen:

$D_0 = D(P_{\varphi 0})$ den Wert des Parameters D in dem Zentralpunkt $P_{\varphi 0} = (0,0)$;

$D_i = D(P_{\varphi i})$ und $D_{i+1} = D(P_{\varphi i+1})$ jeweils die Werte des Parameters D in den beiden ermittelten Rand- bzw. Grenzpunkte, welche am nächsten an Punkt S liegen;

$D_S = D(S)$ den ermittelten Wert des Parameters D in dem Punkt S;

$D_P = D(P)$ den Wert des Parameters D in dem Punkt P.

Die Werte der anderen Designparameter können nach der gleichen Vorgehensweise ermittelt werden.

Die Ecken des Designdreiecks 10 können für unterschiedliche Anwendungs- bzw. Designschwerpunkte stehen. Einer der Eckpunkte kann beispielsweise ein Raumdesign bestimmen, einer der Eckpunkte kann ein zwischenbereichsbetontes Design (zum Beispiel Design für einen Computerarbeitsplatz) bestimmen und einer der Eckpunkte kann ein Design mit Schwerpunkt Nähe (Lesen, Uhrmacher, usw.) bestimmen.

Je näher der Punkt im Designdreieck 10 an einer Ecke liegt, desto höher ist die Gewichtung dieses Anwendungs- bzw. Designschwerpunktes und desto ausgeprägter wird das zu ermittelnde Design an diesen Anwendungs- bzw. Designschwerpunkt angepasst. Nachfolgend steht R für Raumdesign, Z für zwischenbereichsbetontes Design, N für Schwerpunkt Nähe bzw. für ein nahbereichbetontes Design.

Die Designschwerpunkte können selbstverständlich auch andere Größen, wie zum Beispiel hartes Design, weiches Design, dynamisches Design usw. oder andere Tätigkeitsschwerpunkte darstellen.

Allgemein gilt für einen Punkt im gleichseitigen Dreieck, dass die Summe der senkrechten Abstände zu den Dreiecksseiten eine Konstante ist:

$$a_R + a_Z + a_N = K = \text{Konstante.}$$

Diese Abstände können einfach für die Designgewichtung der gegenüberliegenden Ecke herangezogen werden. Vorteilhafterweise setzt man für K=100. Dann entsprechen automatisch die Längen der Stecken $a_R$, $a_Z$, und $a_N$ den prozentualen Gewichtungen der jeweiligen Designecken. Die drei prozentualen Gewichtungen können dann zu einer sechsstelligen Designzahl zusammengefasst werden. Dies ermöglicht es, das entsprechende Gleitsichtglasdesign mit nur einer einzigen Zahl, der sogenannten Designzahl, zu identifizieren und zu bestellen.

Die Designzahl kann wie folgt definiert werden:

Die ersten beiden Stellen, also die Hunderttausender- und Zehntausenderstelle, bilden die Gewichtung Raum $a_R$, die nächsten beiden Stellen, also die Tausender- und Hunderterstelle, bilden die Gewichtung Zwischenbereich $a_Z$, und die letzten beiden Stellen, also die Zehner und Einerstelle, bilden die Gewichtung Nähe aN.

Die Designzahl 224731 bedeutet demnach: $a_R$=22, $a_Z$=47 und $a_N$=31.

Wie bereits oben beschrieben erfolgt die automatische Designabänderung in Abhängigkeit von der Lage des Punktes im Designdreieck 10 in geeigneter Weise mittels einer Interpolation der vorgegebenen Werte der Designparameter bzw. der vorgegebenen designbestimmenden Glasgrößen.

Der Brillenglaskonstrukteur kann, ausgehend von einem bestimmten Grund- bzw. Startdesign, das für den jeweiligen Produkttyp (Universalgleitsichtglas, Indoorglas) erstellt wurde, die Grenzen der möglichen bzw. erwünschten Glasmodifikation festlegen. Diese Grenzen bestimmen dann die Werte der Designparameter in den Eckpunkten.

In der nachfolgenden Tabelle 1 sind Parameter eines Designs bzw. die designbestimmenden Glasgrößen aufgelistet:

Tabelle 1:

| $A_1$(BF) | Reziproke Objektentfernung im Bezugspunkt Ferne |
|---|---|
| $A_1$(BN) | Reziproke Objektentfernung im Bezugspunkt Nähe |
| $g_{FT}$ | Fernteilgewichtung (0 - 100) |
| $g_{NT}$ | Nahteilgewichtung (0 - 100) |
| $g_{PZ}$ | Gewichtung Prog.Zone (0-100), Gaussmaximum von $A_1$ |
| DkGW | Dynamik Gewicht (0-100), |
| dDF | $\Delta$DF vertikale Position des Designpunktes Ferne |
| dDN | $\Delta$DN vertikale Position des Designpunktes Nähe |
| usw. | |

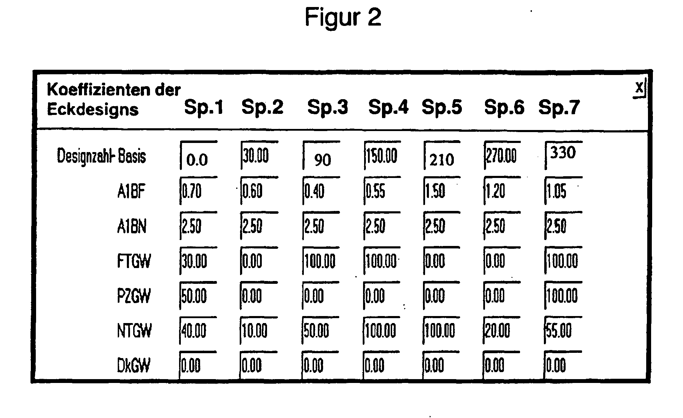

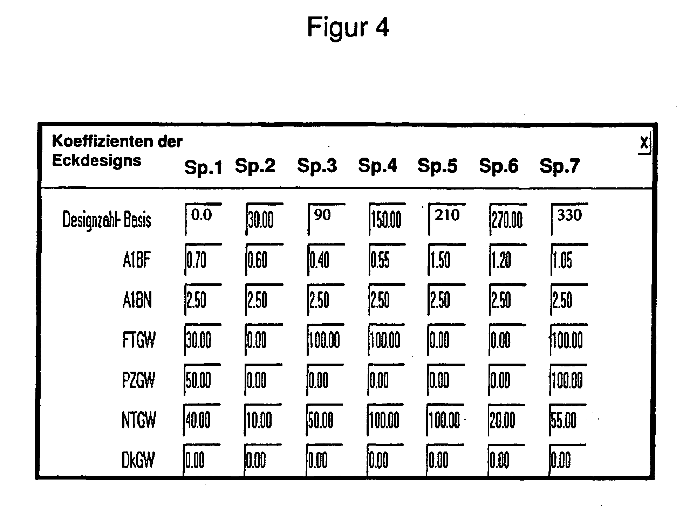

Mindestens für die drei Ecken des Designdreiecks 10, vorteilhafterweise aber auch noch für je einen Zwischenpunkt auf den Dreiecksseiten, werden tabellarisch die in **Fig. 2** oder **Fig. 4** gezeigten Werte der Designparameter für je ein Design vorgegeben.

In Spalte 1 (Sp.1) in Fig. 2 und 4 sind Werte der Designparameter in dem Zentralpunkt (bzw. für das Zentraldesign), in Spalten 2 bis 7 (Sp. 2 bis Sp. 7) die Werte der Designparameter in den vorgegebenen Rand- bzw. Grenzpunkten auf den Seitenkanten des Designdreiecks 10 angegeben. Die Winkelkoordinate φ des jeweiligen Rand- bzw. Grenzpunkt ist in der ersten Reihe der Tabelle (vgl. Reihe Designzahl-Basis) angegeben.

In Fig. 2 und 4 bezeichnen:

A1 BF die reziproke Objektentfernung im Bezugspunkt Ferne;
A2BN die reziproke Objektentfernung im Bezugspunkt Nähe;
FTGW die Fernteilgewichtung (Werte 0 bis 100);
PZGW die Gewichtung des Progressions- bzw. Zwischenbereichs;
NTGW die Nahteilgewichtung (Werte 0 bis 100);
DkGW die Gewichtung Dynamik.

Die Designparameter können ebenfalls weitere Parameter umfassen. Diese Parameter können zum Beispiel Parameter umfassen, welche das Objektabstandsmodell, und/oder den Verlauf der Hauptlinie, und/oder die Position der Design- oder Bezugspunkte für die Nähe und/oder Ferne, unmittelbar oder mittelbar charakterisieren.

Für die ausgewählten Designs an den Ecken und eventuell noch Zwischenwerten auf den Dreieckseiten, welche nicht die Seitenhalbierenden sein müssen, werden die Werte der Designparameter bzw. die Bestimmungsgrößen vorgegeben. Dann erfolgt für einen beliebigen Punkt im Designdreieck 10 eine zweimalige Interpolation der vorgegebenen Designparameter bzw. Bestimmungsgrößen.

Die Vorgabe und spätere zweidimensionale Interpolation kann für zwei der drei Abstände $a_R$, $a_Z$, und $a_N$ erfolgen. Da die Summe der drei Abstände im gleichseitigen Dreieck konstant ist, existieren nur zwei unabhängige Variablen. Vorzugsweise erfolgt die Interpolation jedoch, wie oben bereits beschrieben, in den zwei Größen Winkel φ

und Ausprägung $\alpha$.

Die erste Interpolation erfolgt nach dem Winkel $\varphi$ und die zweite Interpolation nach der Ausprägung $\alpha$. So erhält man einen kontinuierlichen Designübergang.

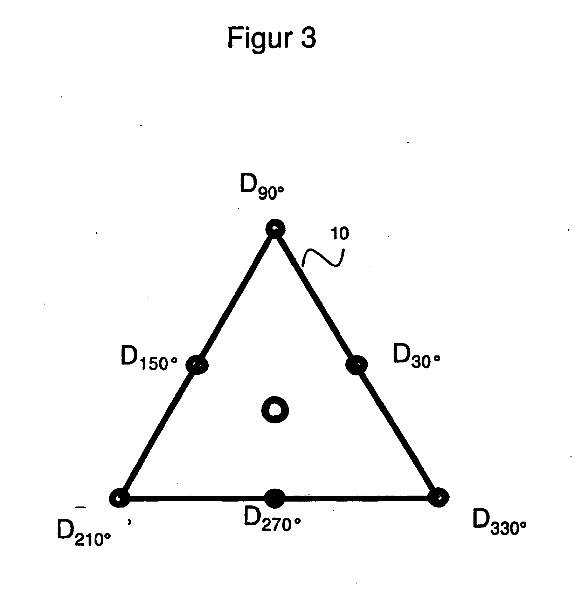

**Fig. 3** zeigt beispielhaft eine zweidimensionale Designinterpolation mittels eines Designdreiecks. D bezeichnet ein Designparameter in dem jeweiligen Punkt des Designdreiecks 10.

Es werden 7 Designs hinterlegt. Die Mitte des Designdreiecks definiert bzw. bestimmt ein ausgewogenes Design, die Ecken des Designdreiecks drei Eckdesigns und die Seitenhalbierenden des Designdreiecks drei Übergangsdesigns. Jedem Punkt innerhalb des Designdreieckes ist dann ein anderes Design zugeordnet.

Die Übergänge erfolgen fließend durch eine zweimalige lineare Interpolation der Designkoeffizienten in Polarkoordinaten.

Für das Design in der Mitte des Designdreiecks können die Werte der Designparameter direkt in einem Startdesignfile abgespeichert werden. Die Werte der Parameter der sechs Grenzdesigns, d.h der drei Eckdesigns und der drei Übergangsdesigns, können aus den Werten der Designparameter abgeleitet werden. In diesem Fall werden nur die Änderungskoeffizienten benötigt. Alternativ können die Werte der Parameter der sechs Grenzdesigns direkt in dem Startdesignfile abgespeichert werden.

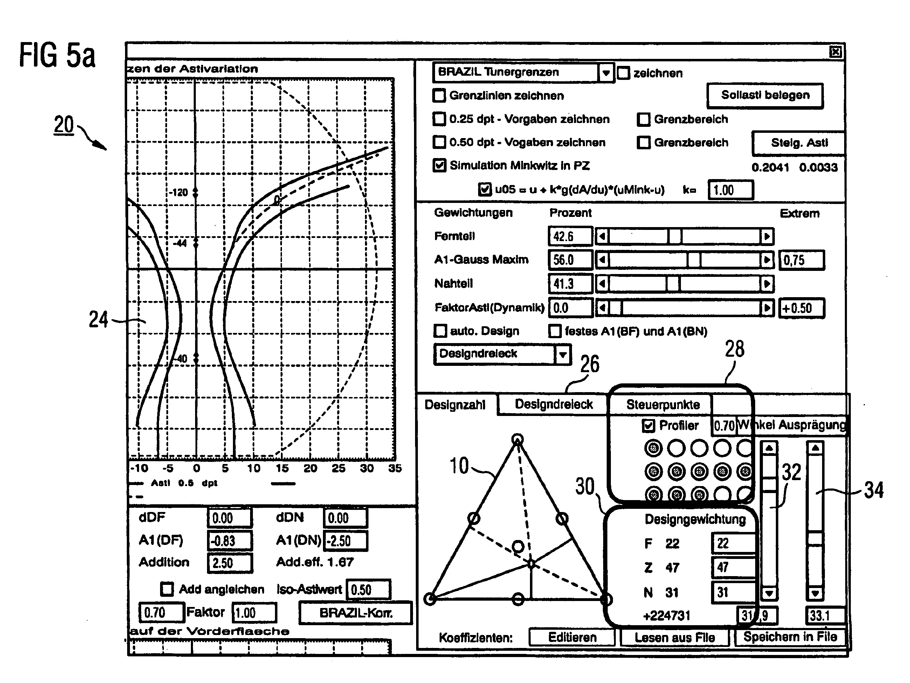

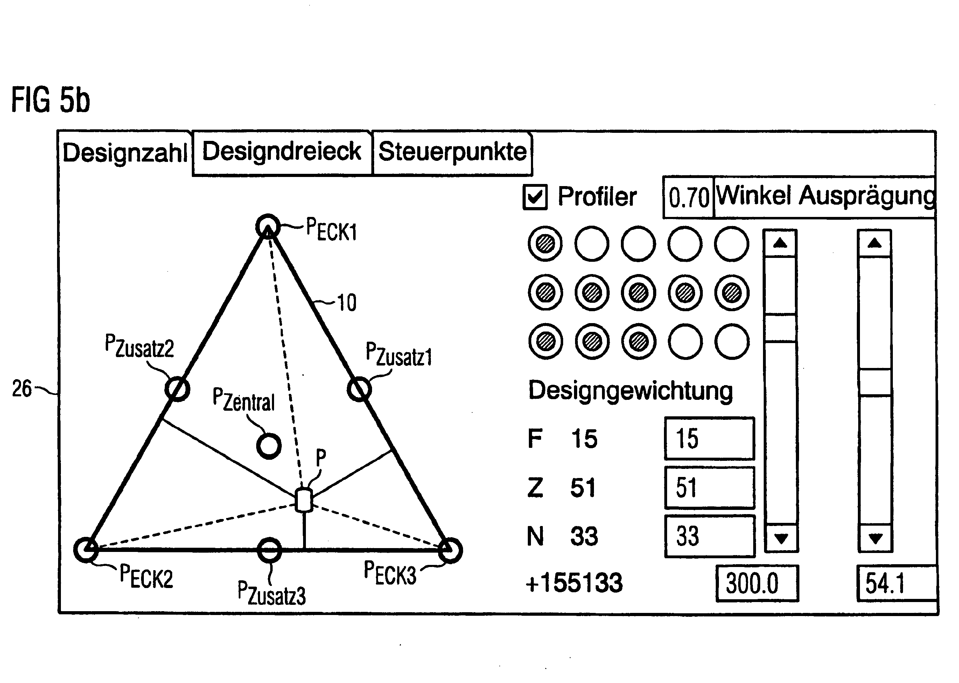

**Fig. 5a** zeigt ein Beispiel einer graphischen Benutzerschnittstelle 20 zur Visualisierung eines Designdreiecks und gegebenenfalls Modifikation des Designs, welches einem Punkt innerhalb des Designdreiecks zugeordnet ist. Fig. 5b zeigt eine vergrößerte Ansicht der in Fig. 5a gezeigten graphischen Benutzerschnittstelle 20 mit dem Designdreieck.

Die graphische Benutzerschnittstelle 20 umfasst einen ersten Anzeigeabschnitt 22 und einen zweiten Anzeigeabschnitt 24.

Der erste Anzeigeabschnitt 22 umfasst mehrere Teilabschnitte. In dem ersten Teilabschnitt 26 (Designdreieckanzeige-Teilabschnitt) wird die berechnete Position des ermittelten Punkts $P = P(x, y) = P_{Design}$ innerhalb des Designdreiecks 10 visualisiert. Zusätzlich zu den Designeckpunkten $P_{Eck1}$, $P_{Eck2}$ und $P_{Eck3}$ werden ebenfalls drei Zusatzpunkte $P_{Zusatz1}$, $Pz_{usatz2}$, und $P_{zusatz3}$, sowie ein zentraler Zusatzpunkt $P_{zentral}$ auf welchen die Werte der Designparameter $D^j$ vorgegeben werden, visualisiert. Die Position des Punkts P innerhalb des Designdreiecks 10 kann seitens des Benutzers aktiv verändert werden. Die entsprechenden Designparameter in der neuen Position des Punkts P werden dann automatisch berechnet und angezeigt.

Ferner ist der erste Anzeigeabschnitt 22 ausgelegt, Werte der Designparametern des zu visualisierenden oder des visualisierten Designs anzuzeigen und gegebenenfalls (interaktiv) zu modifizieren. Der erste Anzeigeabschnitt umfasst ferner:

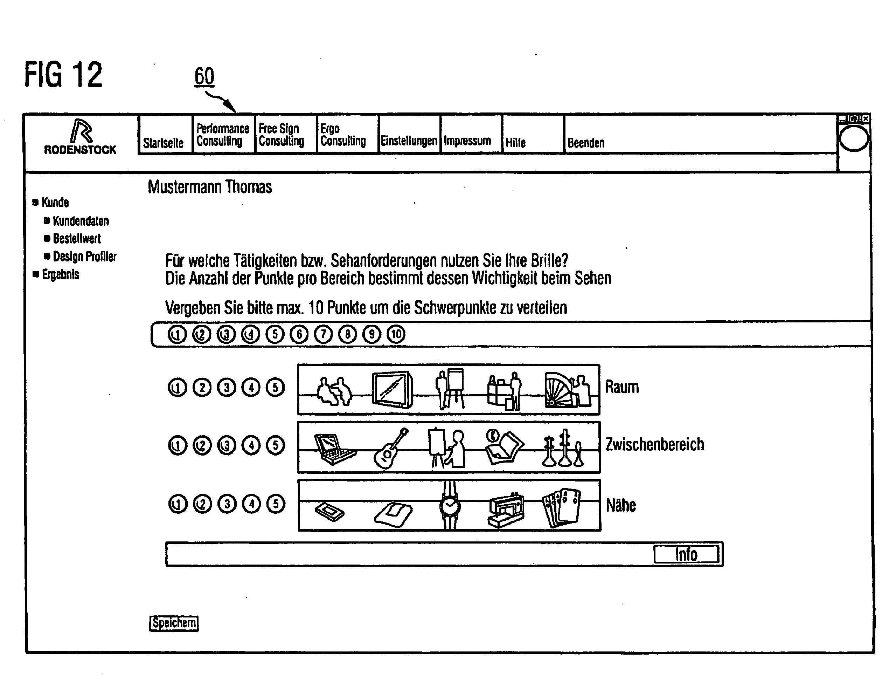

- einen Teilabschnitt 28, welcher ausgelegt ist, eine Punktevergabe in dem "Design Profiler" (siehe Fig. 12) anzuzeigen und gegebenenfalls zu modifizieren;
- einen Teilabschnitt 30, welcher ausgelegt ist, die Gewichtungen des Eckdesigns (bzw. der den Punkten $P_{Ek1}$, $P_{Eck2}$ und $P_{Eck3}$ zugeordneten Designs) und die sechsstellige Designzahl anzuzeigen. In dem konkreten Beispiel ist die Gewichtung des Fern-, des Zwischen- und des Nahbereichs jeweils 15, 51 und 34. Die sechsstellige Designzahl ist entsprechend 155134;
- einen Teilabschnitt 32, welcher ausgelegt ist, den Winkel $\varphi$ (auch Designwinkel genannt) anzuzeigen;
- einen Teilabschnitt 34, welcher ausgelegt ist, die Ausprägung $\alpha$ (auch Designausprägung genannt) anzuzeigen.

Der zweite Anzeigeabschnitt 24 ist ausgelegt, das dem Punkt P bzw. der Kombination der Designparameter in dem Punkt P zugeordnete Design (schematisch) zu visualisieren. In dem konkreten Ausführungsbeispiel wird der Verlauf der 0,5 dpt Sollisoastigmatismuslinie der Sollastigmatismusverteilung des dem Punkt P entsprechenden Designs gezeigt. Zusätzlich können die Grenzen der Variation des Verlaufs der 0,5 dpt Sollisoastigmatismuslinie gezeigt werden. Es ist ebenfalls möglich, andere Designeigenschaften (zum Beispiel Verteilung des Astigmatismusfehlers, des Refraktionsfehlers, oder anderer optischen Eigenschaften, des Visus, etc.) anzuzeigen oder zu visualisieren.

Die graphische Benutzerschnittstelle 20 kann weitere Abschnitte oder Teilabschnitte aufweisen, welche zur Eingabe, Visualisierung und/oder Abänderung anderer Parameter des berechneten Designs ausgelegt sind.

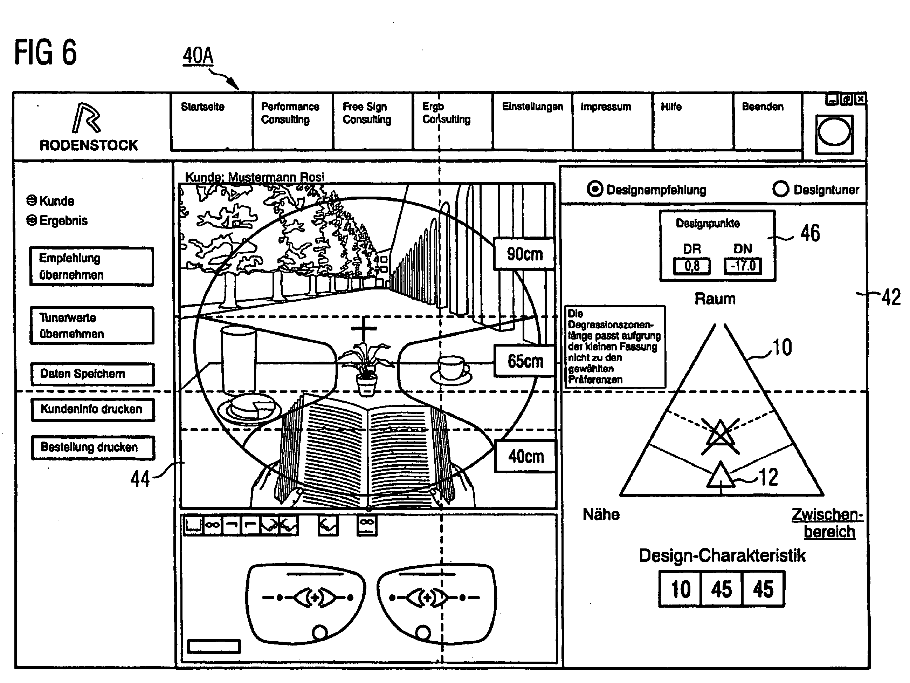

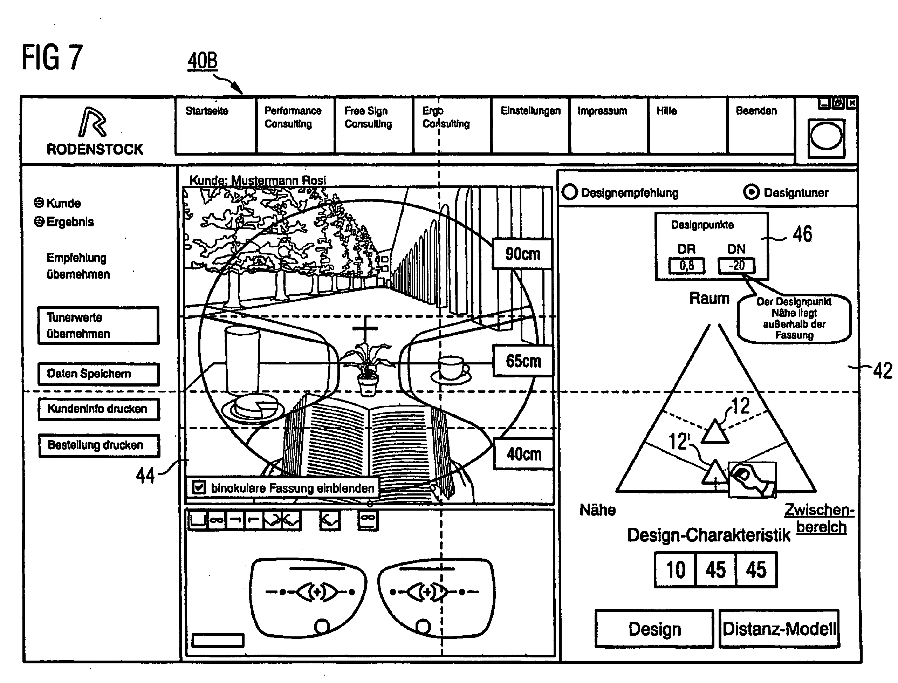

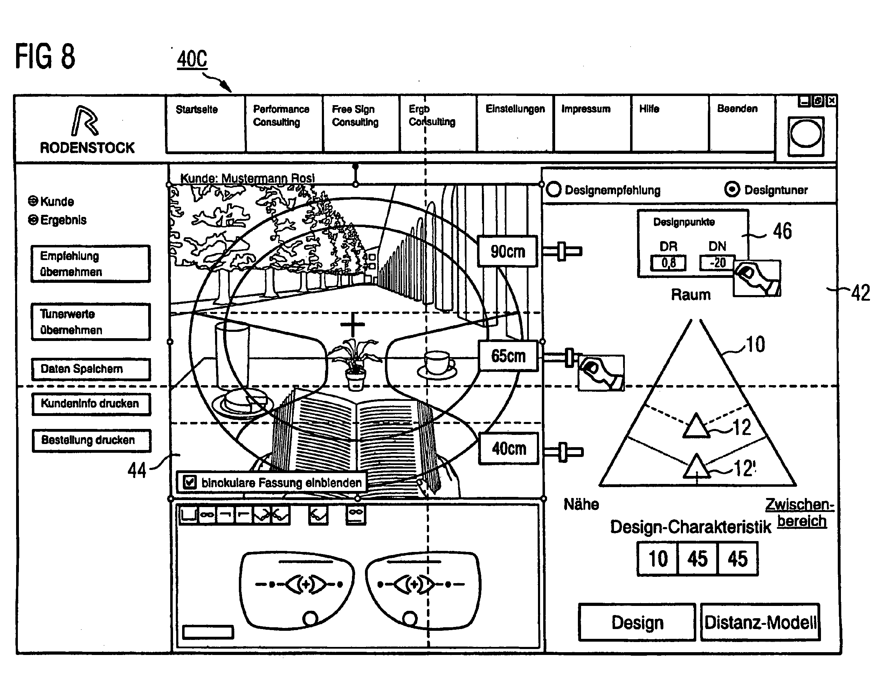

**Fig. 6 bis 8** zeigen Beispiele von graphischen Benutzerschnittstellen 40A, 40B, 40C zur Visualisierung und gegebenenfalls interaktiven Modifizierung eines Designs für ein progressives Brillenglas, wobei das Design insbesondere als Punkt innerhalb eines vorgegebenen Designvielecks visualisiert wird. Die graphischen Benutzerschnittstellen 40A bis 40C umfassen jeweils einen ersten Anzeigeabschnitt 42 und einen zweiten Anzeigeabschnitt 44.

Der erste Anzeigeabschnitt 42 ist ausgelegt, die berechnete Position des ermittelten Punkts $P = P_{Design}$ innerhalb des Designdreiecks 10 zu visualisieren. Die Position des Punkts P wird bei den in Fig. 6 bis 8 gezeigten Ausführungsbeispielen mittels eines kleinen Dreiecks 12 visualisiert. Die Position des Punkts P kann interaktiv verändert werden. Bezugszeichen 12' bezeichnet die neue Position des Punkts P. Der erste Anzeigeabschnitt umfasst ferner einen Designparameter-Anzeigeabschnitt 46, welcher ausgelegt ist, Designparameter (zum Beispiel Designpunkte) des dem Punkt P entsprechenden Designs anzuzeigen.

Der zweite Anzeigeabschnitt 44 ist ausgelegt, den Seheindruck durch ein progressives Brillenglas, welches das dem Punkt P = $P_{Design}$ zugeordnete Design aufweist, anzuzeigen. Der zweite Anzeigeabschnitt kann ferner ausgelegt sein, ein fertiges Brillenglas oder ein Paar fertiger Brillengläser, welches das dem Punkt P = $P_{Design}$ zugeordnete Design aufweist, schematisch anzuzeigen (zum Beispiel in einer perspektivischen oder in einer frontalen Sicht).

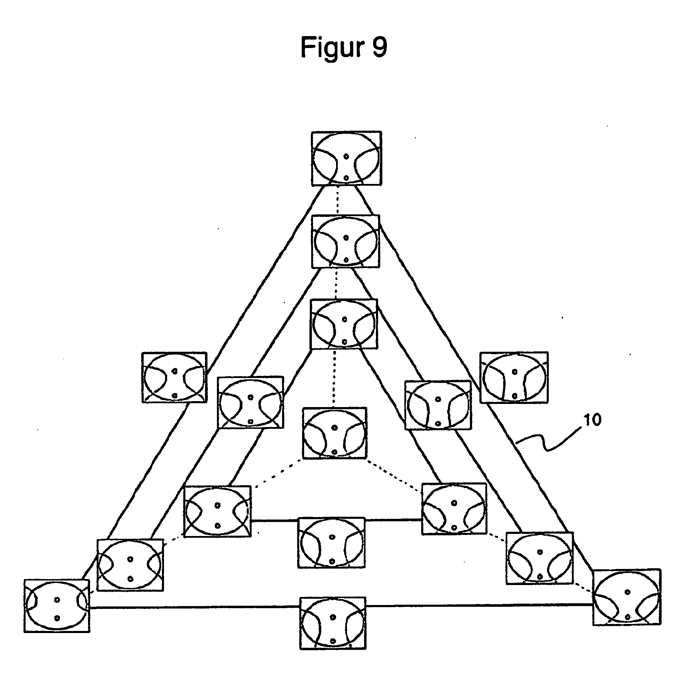

**Fig. 9** zeigt verschiede Designtypen innerhalb eines Designdreiecks.

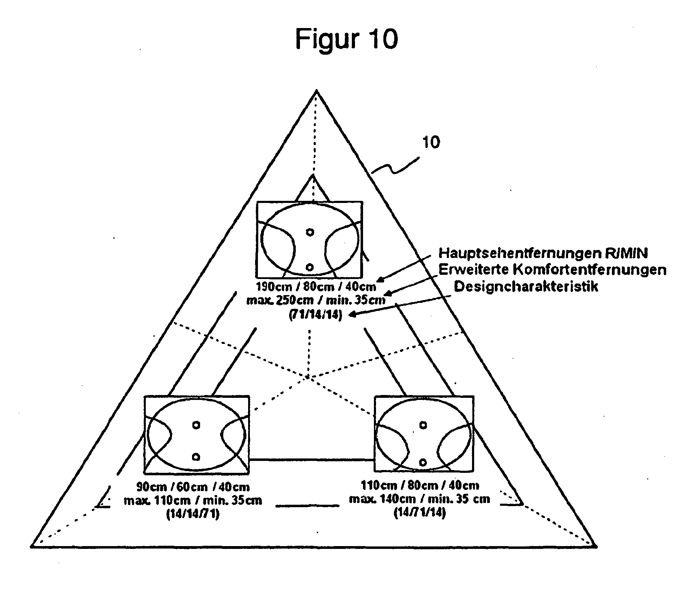

**Fig. 10** zeigt Beispiele von drei unterschiedlichen Designs innerhalb eines Designdreiecks. Die drei in Figur 10 dargestellten Designtypen liegen nicht in den Ecken des Design-Dreiecks, sondern sind leicht nach innen versetzt. Sie sollen keine Designextrema darstellen. Unter dem jeweiligen Design werden jeweils die Hauptsehentfernungen (Raum, Mitte und Nähe); erweiterte Komfortentfernungen und die Punktvergabe bezüglich der Gewichtungen Raum, Mitte und Nähe (Designcharakteristik); und die Lage der Designpunkte gezeigt.

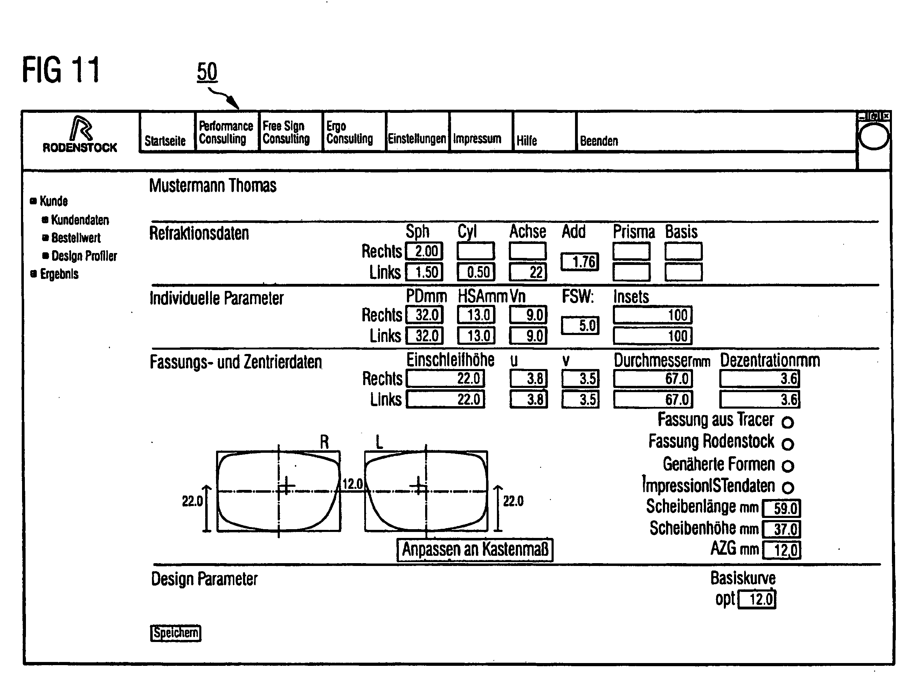

**Fig.11** zeigt ein Beispiel einer graphischen Benutzerschnittstelle 50 zur Eingabe von Daten des progressiven Brillenglases und des Brillenträgers. Die Daten des progressiven Brillenglases und des Brillenträgers umfassen insbesondere Refraktionsdaten (Sphäre (Sph), Zylinder (Cyl), Achse, Addition (Add), Prisma, Basis), individuelle Parameter des Brillenträgers und der individuellen Gebrauchsstellung (Pupillendistanz (PD) rechts und links, Hornhautscheitelabstand (HSA) rechts und links, Vorneigung (VN) rechts und links, Fassungsscheibenwinkel (FSW)); sowie Fassungs- und Zentrierdaten (Einschleifhöhe rechts und links, Durchmesser rechts und links, Dezentration rechts und links, Scheibenlänge, Scheibenhöhe, Abstand zwischen den Gläsern (AZG), etc.). Ferner besteht die Möglichkeit den Refraktionsabstand Nähe anzugeben. Sollte der Brillenträger ein vom Standard abweichendes Konvergenzverhalten beim Blick in die Nähe zeigen, kann im Feld Inset den vorbelegten Wert (100%) abgeändert werden.

Die individuellen Parameter des Brillenträgers und der individuellen Gebrauchsstellung (PD, HSA, VN, FSW; etc.) können zum Beispiel mittels eines 3D-Videozentriersystems (zum Beispiel ImpressionIST® Avantgarde der Firma Rodenstock GmbH) erfasst werden. Durch das 3D-Videozentriersystem ist eine exakte Ermittlung aller individuellen Parameter sowie der Zentrier- und Fassungsdaten bei natürlicher Kopf- und Körperhaltung möglich. Zur Bestimmung der individuellen Parameter können auch für diesen Zwecken entwickelten Messtools eingesetzt werden.

Die Werte der Fassung- und Zentrierdaten können automatisch eingetragen werden, sobald ein entsprechender Menüpunkt oder Menübutton (zum Beispiel "Fassung aus Tracer" oder "Fassung Rodenstock") ausgewährt wird. Mit der Funktion "Anpassen an Kastenmaß" kann die Fassung den ggf. geänderten Fassungsdaten anpasst werden.

Das oben beschriebene Verfahren kann Bestandteil eines Computerprogramms zur Kundenberatung sein. Bei der Beratung kann zunächst die eine Startposition im Designdreieck ermittelt und visualisiert werden. Diese Startposition, welche ein entsprechendes Design bestimmt, kann zum Beispiel direkt aus den Kundenpräferenzen, d.h. der Punktevergabe zum Beispiel in einer graphischen Benutzerschnittstelle (Designprofiler oder Design Optimierer), erzeugt werden.

Insbesondere kann der Kunde (der Brillenträger) im Rahmen einer Beratung nach seinen Präferenzen befragt werden. Anhand dieser Befragung können in dem Eingabeabschnitt der in **Fig. 12** gezeigten graphischen Benutzerschnittstelle "Designoptimierer" oder "Design Profiler" 60 bis maximal 10 Punkte für die drei Designschwerpunkte, die den Ecken des Designdreiecks 10 zugeordnet sind (zum Beispiel Raum, Zwischenbereich und Nähe), vergeben werden. In diesem Beispiel können ferner für jeden Schwerpunkt maximal 5 Punkte vergeben werden. Aus der Punktevergabe kann direkt auf die Position im Designdreieck 10 geschlossen werden, da diese Punktevergabe den Schwerpunkten der Ecken des Designdreieckes 10 entspricht.

Bezeichnen zum Beispiel $p_1$, $p_2$, $p_3$ die Punktevergabe aus dem "Designprofiler" 60 und "$a$" einen Sicherheitsabstand vom Rand des Designdreiecks 10, den die nach der Beratung ermittelte Startposition vorzugsweise aufweisen soll, dann berechnen sich die Abstände des Punktes im Dreieck zu den Dreieckseiten wie folgt:

$$g_1 = p_1 + a,$$

$$g_2 = p_2 + a,$$

$$g_3 = p_3 + a$$

$$a_1 = \frac{k}{g_1 + g_2 + g_3} g_1$$

$$a_2 = \frac{k}{g_1 + g_2 + g_3} g_2$$

$$a_3 = \frac{k}{g_1 + g_2 + g_3} g_3,$$

wobei k die geforderte Summe der senkrechten Abstände zu den Dreiecksseiten ist (zum Beispiel k=100).

Ein Sicherheitsabstand $\alpha$ wird vorgegeben, um nach der ersten Beratung nicht gleich auf ein extremes Glasdesign zu kommen. $\alpha$ kann zum Beispiel = 0,7 sein. Ebenfalls kann die maximale Einzelpunktvergabe $p_{max}$=5 sein.

Beispiel:

a=0,7

k=100

| Profiler | Korrigierte Werte | Designgewichtung |
|----------|-------------------|------------------|
| Raum $p_1 = 1$ | $g_1 = 1,7$ | $a_1 = 15,3 => 15$ |
| Raum $p_2 = 5$ | $g_2 = 5,7$ | $a_2 = 51,4 => 51$ |
| Raum $p_3 = 3$ | $g_3 = 3,7$ | $a_3 = 33,3 => 33$ |

Diese Parameter ergeben eine Designzahl= 155133.

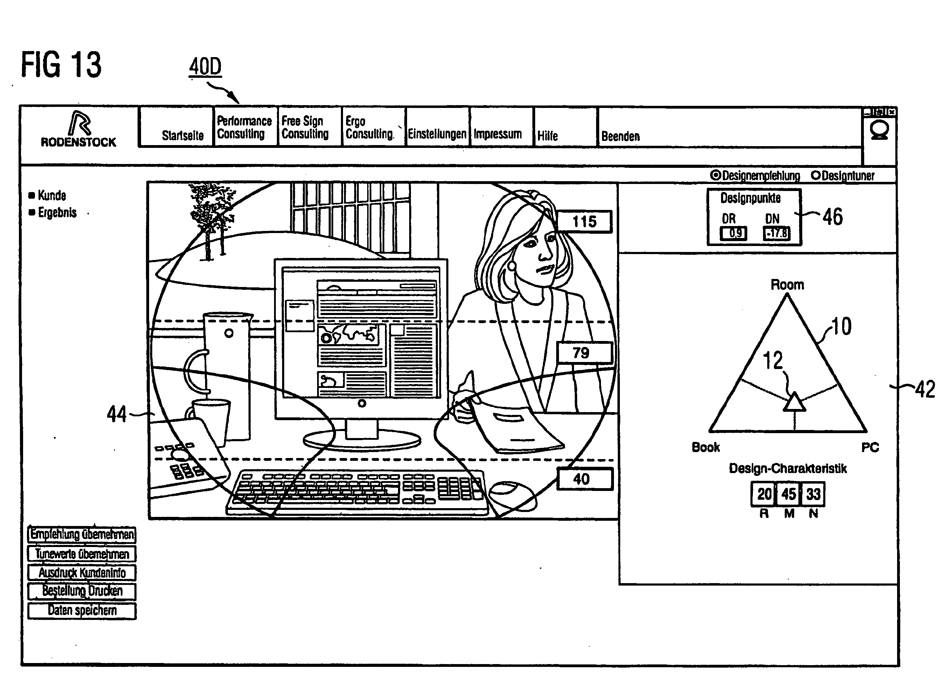

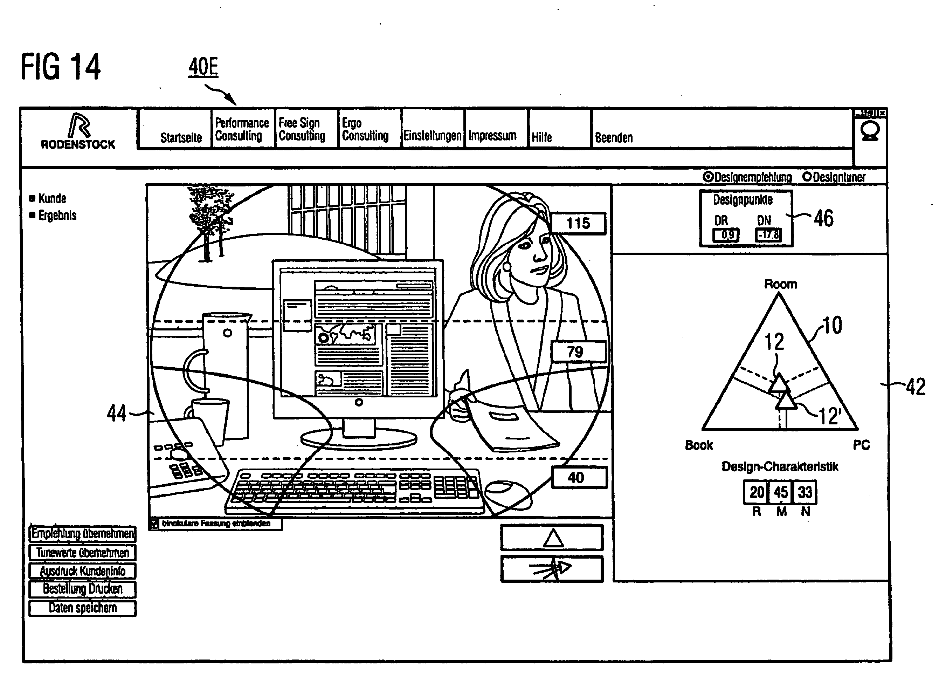

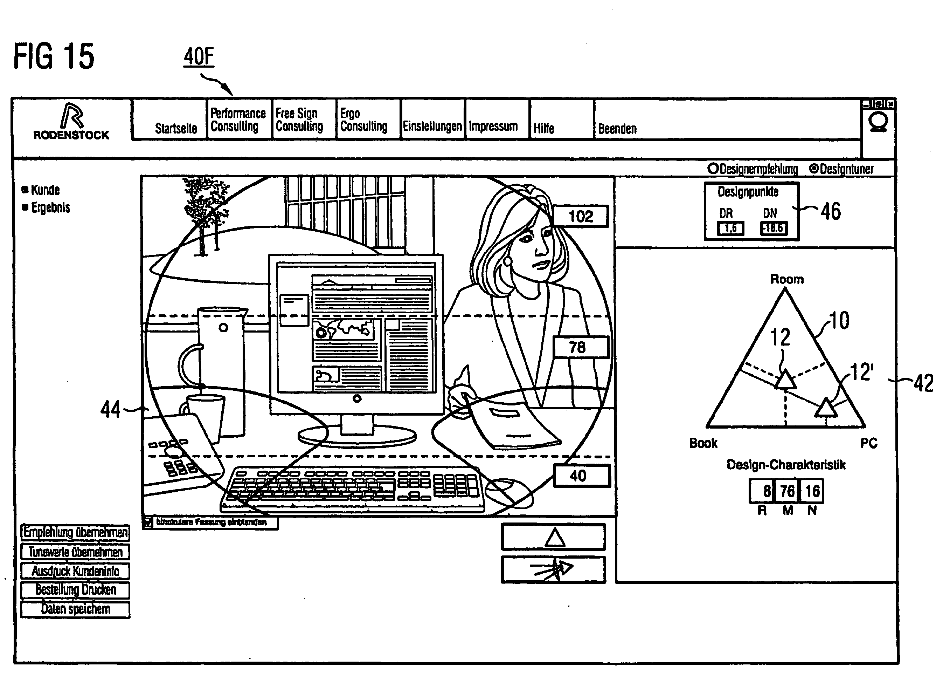

Fig. 13 bis 15 zeigen weitere Beispiele von graphischen Benutzerschnittstellen 40D, 40E, 40F zur Visualisierung und gegebenenfalls Modifikation eines Designs für ein progressives Brillenglas (nachfolgend auch "Designtuner" oder "Designoptimierer" genannt). Die graphischen Benutzerschnittstellen 40D bis 40F umfassen jeweils einen ersten Anzeigeabschnitt 42 und einen zweiten Anzeigeabschnitt 44. Der erste Anzeigeabschnitt ist ausgelegt, die berechnete Position des ermittelten Punkts P = $P_{Design}$ innerhalb eines Designdreiecks 10 zu visualisieren. Die Position des Punkts P wird bei den in Fig. 14 bis 16 gezeigten Ausführungsbeispielen mittels eines kleinen Dreiecks 12 visualisiert. Der erste Anzeigeabschnitt 42 umfasst ferner einen Teilabschnitt 46 (Designparameter-Anzeigabschnitt), welcher insbesondere ausgelegt ist, die Designzahl sowie Designpunkte Mitte DM und Nähe DN anzuzeigen. Der zweite Anzeigeabschnitt 44 umfasst einen Designanzeigeabschnitt, welcher ausgelegt ist, den Seheindruck durch ein progressives Brillenglas, welches das dem Punkt P zugeordnete Design aufweist, anzuzeigen.

Das beschriebene Vorgehen zum Erzeugen der Soll-, Optimierungs- und Berechnungsvorgaben von progressiven Brillengläsern (Gleitsichtgläsern) mit variablem Glasdesign kann in ein Beratungsprogramm integriert werden. Das Verfahren kann jedoch selbstverständlich auch ohne Beratungsprogramm verwendet werden. Es können damit beliebig viele Glasdesigns aus einem vorgegeben Startdesignfile erzeugt werden. Für die einzelnen Produkte/Designs muss dann nur die zugehörige Designzahl bzw. Position im Designdreieck hinterlegt werden. So werden zum Beispiel die fixen Designs Ergo Book, Ergo PC und Ergo Room von Multigressiv Ergo und Impression Ergo der Rodenstock GmbH durch Hinterlegen der zugehörigen Designzahlen erzeugt. Leichte Designmodifikationen sind nun nachträglich jederzeit möglich.

Auch können damit schnell zu einem bestehenden Gleitsichtglastyp / Startdesign zusätzliche Designs mit geänderten Schwerpunkten (Ferne / Autofahrerdesign, Nahdesigns, usw.) erzeugt oder leichte Designmodifikationen durchgeführt werden. Das zusätzliche Abändern der Lage der Designpunkte und Anpassen der Objektentfernungen in den Bezugs- bzw. Designpunkten ist selbstverständlich nach wie vor möglich.

Weitere Ausführungsbeispiele, Vorteile und Eigenschaften der Erfindung sowie Hintergrundinformationen ergeben sich aus den nachfolgenden Beispielen:.

Ein Beispiel betrifft die Ermittlung eines Designs für ein individuelles Nahglas anhand eines Designdreiecks.

Nahbrillengläser oder Nahgläser sind progressive Brillengläser, welche ein Sehen in den Nah- und Zwischenbereichen und den entsprechenden Entfernungen ermöglichen. Die einzelnen Sehbereiche des Brillenglases sind für das Sehen in den verschiedenen Nahdistanzen angepasst und entsprechend angeordnet. Klassische Nahgläser besitzen meist eine progressive Vorderfläche, die Rezeptfläche wird augenseitig nach Bestelleingang gefertigt. Dabei wird bei der Fertigung nach dem Grundkurvensystem auf vorgefertigte und damit standardisierte Blanks (Halbfertigprodukte) zurückgegriffen. Anders als bei Brillengläsern, die mit der Freiformtechnologie hergestellt werden, sind sie nicht für jede Wirkung einzeln optimiert. Dies hat zur Folge, dass die optische Leistung von Gläsern mit unterschiedlichen Refraktionsdaten aus ein und derselben Produktfamilie unterschiedlich ausfallen kann. Des Weiteren beeinflussen auch der Sitz der Fassung und die Physiognomie des Brillenträgers die Größe der Sehbereiche. Fließen statt der individuellen Fassungs- und Zentrierdaten Standardwerte in die Berechnung der Gläser ein, die von der realen Tragesituation abweichen, so führt das zu einer Einschränkung der nutzbaren Blickfelder. Bei den festen Degressionen von klassischen Nahgläsern ergeben sich abhängig von der Akkommodation des Brillenträgers unterschiedliche Durchblickshöhen im Brillenglas für bestimmte Entfernungen. Dadurch fällt die Hauptsehentfernung nicht mit dem größten Sehbereich im Brillenglas zusammen. Kopfhaltung und Blicksenkung müssen dem Glas angepasst werden, was auf Dauer unkomfortabel werden kann.

Individuelle Nahgläser (wie zum Beispiel Impression Ergo der Firma Rodenstock GmbH) werden dagegen individuell unter Berücksichtigung von Rezeptdaten, von individuellen Daten des Brillenträgers (individuelle Parameter des Brillenträgers und der Gebrauchsstellung des Brillenglases oder der Brille) berechnet bzw. optimiert. Ferner können Ergonomieparameter, Designparameter und/oder Sehpräferenzen berücksichtigt werden.

Das nachfolgend beschriebe beispielhafte Verfahren zur Ermittlung und gegebenenfalls Optimierung eines Designs für ein Nahglas ermöglicht es, effizient ein Brillenglas und insbesondere ein Nahglas zu designen, das nach den individuellen Gewohnheiten eines Brillenträgers bei der Nutzung in der Nähe optimiert wird. Die neuen Freiheitsgrade bieten die Möglichkeit, das Design für ein Nahglas auf nahezu alle Situationen beim Gebrauch in den nahen und mittleren Distanzen anzupassen. Der Brillenträger erhält somit maximal große Sehbereiche für die Entfernungen, die er hauptsächlich nutzt bei harmonischen Übergängen zwischen den zentralen und peripheren Sehbereichen. Die Sehbereiche sind so angeordnet, dass dadurch ein entspanntes und ermüdungsfreies Sehen bei natürlicher Kopf- und Körperhaltung möglich ist. Somit können bei allen Anwendungen optimale Abbildungseigenschaften gewährleistet werden.

Innerhalb des Designdreiecks (welches eine Familie von Designs, zum Beispiel eine Familie von Nahglasdesigns darstellen kann) können insbesondere folgende Designtypen festgelegt werden, wobei die Hauptsehentfernungen für das jeweilige Design hinterlegt sind und die Designpunkte auf das jeweilige Design abgestimmt sind. Die drei Designs bzw. Designtypen entsprechen den drei Hauptanwendungen von Nahgläsern und den Eckdesigns in einem Designdreieck.

## Das Book Design

Dieses Design ist so gewählt, dass es für eine Arbeitsentfernung im Greifraum (in ca. 40cm) die breitesten Sehbereiche im Glas bietet. Darüber hinaus kann der Brillenträger garantiert bis ca. 90cm scharf sehen. Das Design ist so gestaltet, dass es einen größeren Sehbereich beim Sehen in nahen Entfernungen, verbunden mit einer komfortablen Blicksenkung ermöglicht. Der Designpunkt Mitte DM kann sich bei diesem Design auf eine vertikale Höhe relativ zum Zentrierkreuz von 0 mm und der Designpunkt Nähe DN auf eine vertikale Höhe relativ zum Zentrierkreuz von -14 mm befinden.

### Das PC Design

Dieses Design ist so gewählt, dass es für eine Arbeitsentfernung zum PC / Monitor die breitesten Sehbereiche im Glas bietet. Darüber hinaus kann der Brillenträger garantiert von ca. 40 cm bis ca. 1,20 m scharf sehen. Das Design ist so gestaltet, dass es einen größeren Sehbereich beim Sehen in der Schreibtisch - Entfernung bietet. Mit dem PC Design kann der Brillenträger durch den entsprechenden Wirkungsanstieg im Glas bis ca. 1,20 m scharf sehen. Somit könnte eine gegenübersitzende Person auch noch scharf gesehen werden. Der Designpunkt Mitte DM kann sich bei diesem Design auf eine vertikale Höhe relativ zum Zentrierkreuz von 0 mm und der Designpunkt Nähe DN auf eine vertikale Höhe relativ zum Zentrierkreuz von -18 mm befinden.

### Das Room Design

Dieses Design ist so gewählt, dass es für eine weitere Arbeitsentfernung als zum PC / Monitor die breitesten Sehbereiche im Glas bietet. Darüber hinaus kann der Brillenträger garantiert von ca. 40 cm bis ca. 2 m scharf sehen. Insbesondere kann der Brilleträger mit dem Room Design durch den entsprechenden Wirkungsanstieg im Glas bei Nullblickrichtung bis ca. 2 m scharf sehen. Somit könnte zum Beispiel ein Flipchart während einer Präsentation auch noch scharf gesehen werden. Der Designpunkt Mitte DM kann sich bei diesem Design auf eine vertikale Höhe relativ zum Zentrierkreuz von -2 mm und der Designpunkt Nähe DN auf eine vertikale Höhe relativ zum Zentrierkreuz von -18 mm befinden.

Bei der Designermittlung und Designoptimierung können insbesondere folgende Optimierungsparameter berücksichtigt werden:

- Ergonomieparameter (wie zum Beispiel Designcharakteristik (zum Beispiel charakterisiert durch die Designzahl) und individuelle Hauptsehentfernungen);
- Designparameter (wie zum Beispiel Designpunkte Mitte und Nähe, Freie Basiskurvenwahl),
- Individuelle Parameter (wie zum Beispiel Pupillendistanz (PD), Hornhautscheitelabstand (HSA), Vorneigung (VN), Fassungsscheibenwinkel (FSW)).

**Designparameter**

Bei einem individuellen Nahglas können die speziellen Sehgewohnheiten eines Brillenträgers durch Berücksichtigung zweier Design- bzw. Bezugspunkte in die Berechnung des Designs für das Brillenglas und somit auch in die Berechnung des Brillenglases mit einbezogen werden. Dies kann durch die Angabe der Designpunkte Mitte DM und Nähe DN erfolgen. Innerhalb der drei festgelegten Designtypen (zum Beispiel Book, PC und Room), d.h. innerhalb der Eckdesigns, ist die Lage der Designpunkte fest vorgegeben. Die Designpunkte Mitte und Nähe können in definierten Bereichen variabel, aber stets für rechts/links (R/L) gleich, festgelegt werden. Die Position der Designpunkte Mitte und Nähe kann jeweils als der vertikale Abstand relativ zum Zentrierkreuz angegeben werden.

Die Bestimmung der idealen Lage der Designpunkte kann in einem interaktiven Beratungsprogramm (zum Beispiel "Ergo Consulting" der Firma Rodenstock GmbH) integriert werden.

Der Designpunkt Nähe beschreibt den Durchblickspunkt des Brillenträgers beim Blick in die Nähe. Hier ist der Brillenträger bei Nahsehaufgaben optimal korrigiert und kann eine für ihn angenehme Blicksenkung einnehmen. Der Designpunkt Nähe DN ist in einem Bereich von -12 mm bis -20 mm, vorzugsweise in einem Bereich von -14 mm bis -18 mm unter dem Zentrierkreuz verschiebbar. Durch eine Veränderung des Designpunkts Nähe DN kann zum Beispiel ein größerer Nahsehbereich geschaffen werden, wenn der Brilleträger besonderen Wert darauf legt. In diesem Fall würde der Designpunkt Nähe DN nach oben verschoben werden um einen größeren Nahbereich und eine für den Brillenträger angenehmere geringere Blicksenkung zu erreichen.

Der Designpunkt Mitte DM beschreibt den Durchblickspunkt des Brillenträgers beim Blick in die mittleren Entfernungen. In diesem Bereich ist der Brillenträger für die mittlere Entfernung optimal korrigiert. Der Designpunkt Mitte DM kann in einem Bereich von -4 mm bis +4 mm um das Zentrierkreuz liegen. Die Veränderung der Lage von Designpunkt Mitte DM spiegelt sich in einer Verkürzung oder Verlängerung der Progressionszone in vertikaler Richtung wieder. Dies hat auch Auswirkungen auf die Größe der Sehbereiche und die Übergänge zwischen den zentralen und peripheren Sehbereichen. Oberhalb von Designpunkt Mitte DM findet designunabhängig eine weitere Wirkungsabnahme statt

Dabei können zum Beispiel in Abhängigkeit von den Fassungsdaten bestimmte Bedingungen an die Position der Designpunkte Mitte und Ferne gestellt werden. So ist es vorteilhaft folgende Bedingungen einzuhalten:

- DN mindestens 2 mm über unterem Fassungsrand;
- Minimaler Abstand DM - DN: 12 mm;
- Maximaler Abstand DM - DN: 24 mm;

Designpunkt Mitte DM mindestens 10 mm unter oberem Fassungsrand.

Diese Bedingungen können bei einer Designempfehlung automatisch berücksichtigt werden. In einer graphischen Benutzerschnittstelle (vgl. zum Beispiel die graphischen Benutzerschnittstellen "Designtuner" 40A bis 40F) können grenzwertige Parameter mittels eines Hinweistextes oder in einer anderer Weise eingeblendet werden.

So kann zum Beispiel anhand der Fassungs- und Zentrierdaten, welche bei der Bestellung des Brillenglases übermittelt werden, die Lage des Designpunktes Nähe DN auf die gewählte Brillenfassung abgestimmt werden. Das gewährleistet eine optimale Ausnutzung der Fassungsgröße. Unter Berücksichtigung von Vorneigung, Hornhautscheitelabstand, sowie der Fassungs- und Zentrierdaten wird die Lage des Designpunktes Nähe DN berechnet, damit der Brillenträger seine individuelle physiologisch günstigste Blicksenkung einnehmen kann.

Ferner können sich Unterschiede in der Progressionszonenlänge und/oder in der Lage des Designpunkts Nähe DN durch verschieden große HSA's und/oder Vorneigung des Brillenglases ergeben. Ein kleiner HSA erfordert bei gleicher Blicksenkung zum Beispiel eine kürzere Progressionslänge. Eine kleine Vorneigung erfordert dagegen bei gleicher Blicksenkung eine längere Progressionszonenlänge.

In einer graphischen Benutzerschnittstelle, wie zum Beispiel eine der graphischen Benutzerschnittstellen "Designtuner" 40A bis 40F, kann demonstriert werden, wie sich eine Verschiebung der Lage der Designpunkte auf das Glasdesign auswirkt. Aufgrund des Wirkungsanstieges im Brillenglas hängen die Breite der Sehbereiche und die Höhe des Flächenastigmatismus von der Addition des Brillenglases und von der Länge, in der der Wirkungsanstieg stattfindet, ab. Dieses Phänomen ist als "Satz von Minkwitz" bekannt. Die Wahl der richtigen Lage der Designpunkte ist somit ein Abwägen aus Vorteilen bzw. sich aus den physikalischen Gegebenheiten ergebenen Einschränkungen im Brillenglas. Wenn die Progression und/oder die Degression durch eine geringfügige Verschiebung des Designpunkts Mitte DM nach oben und der Designpunkt Nähe DN nach unten verlängert wird, werden breitere Sehbereiche ermöglicht. Ein solches Brillenglas ist hervorragend geeignet für Brillenträger, die diese Brille hauptsächlich beim Sehen in mittleren Entfernungen, zum Beispiel bei der Arbeit am PC, nutzen.

Neben den individuellen Parametern können auch die individuellen Sehanforderungen beim Sehen in den nahen und mittleren Entfernungen berücksichtigt werden. Tätigkeiten in den nahen und mittleren Entfernungen können so individuell verschieden sein wie der Sitz einer Brille. Ein Brillenträger benötigt zum Beispiel eine Brille beim Blick auf den Bildschirm, der jedoch in einer anderen Höhe und Entfernung auf seinem Schreibtisch steht als bei seinem Kollegen. Eine andere Brillenträgerin benötigt die Brille für Tätigkeiten, die hauptsächlich in Entfernungen um 2 m stattfinden, möchten damit aber auch lesen. Die unterschiedlichen Sehanforderungen resultieren zum Beispiel in einer unterschiedlichen Punktevergabe in dem "Design Profiler" (siehe Fig. 12). Ferner resultieren die unterschiedlichen Sehanforderungen in unterschiedlichen Designzahlen.

Designzahl und Designcharakteristik

Für die Berechnung des individuellen Designs für ein Nahglas wird insbesondere die Angabe einer Designzahl, welche mit der Designcharakteristik korreliert, benötigt. Die Designzahl kann eine sechsstellige Zahl sein, wobei die zwei ersten Stellen (linke Zahl) sich auf das Sehen im Raum (in den Entfernungen von ca. 60 cm bis 3 m), die zwei mittleren Stellen (die mittlere Zahl) auf das Sehen in mittleren Entfernungen (von ca. 40 cm bis 1,5 m) und die zwei rechten Stellen (rechte Zahl) auf das Sehen in nahen Entfernungen (von ca. 20 cm bis 100cm) beziehen. Minimal kann zum Beispiel die Designzahl pro Entfernungsbereich einen Wert von 00 und maximal einen Wert von 99 einnehmen. Je höher der Wert für den jeweiligen Bereich, desto größer ist der Schwerpunkt und damit die Größe der Sehbereiche. Gleichzeitig wirkt sich die Designzahl auch auf die Entfernungsbereiche und die dazugehörige Raumtiefe aus. Die Summe der drei Designzahlen ergibt im höchsten Fall 99. Liegt sie darüber oder darunter, kann der Wert automatisch normiert werden.

Die Designcharakteristik kann mittels des Designdreiecks grafisch dargestellt werden. Je höher die Gewichtung der Designcharakteristik in einem Bereich, desto weiter wird das, das Design bezeichnende, kleine Dreieck in eine Ecke des Designdreiecks positioniert.

Individuelle Hauptsehentfernungen

Bei der Optimierung konventioneller Nahgläser wird die Fläche auf eine bestimmte Arbeitsentfernung (zum Beispiel 40 cm für das Sehen in der Nähe) berechnet. Um jedoch die beste Abbildung für den Brillenträger in seiner individuellen Umgebung beim Sehen in nahen und mittleren Entfernungen zu gewährleisten, ist eine Berücksichtigung dieser individuellen Hauptsehentfernungen unumgänglich. Bei individuell optimierten Nahgläsern kann je nach Anwendungszweck die Hauptsehentfernung individuell angepasst werden. Somit kann die gesamte Ergonomie des Brillenträgers beim Sehen in nahen und mittleren Entfernungen berücksichtig werden.

Dabei gelten für die Hauptnutzungsbereiche eines Nahglases beispielsweise folgende Wertebereiche:

Tabelle 2:

| Hauptsehentfernung Nähe | 20 cm bis 100 cm |
| Hauptsehentfernung Mitte | 40 cm bis 150 cm |
| Hauptsehentfernung Raum | 60 cm bis 3 m |

In den Designpunkten finden sich die Hauptsehentfernungen wieder. Die Lage des Raumbereiches für die Entfernungen größer als 1 m befindet sich im oberen Bereich des Brillenglases, über dem Designpunkt Mitte DM.

Bei der Berechnung des individuellen Designs kann ebenfalls ein abweichender Refraktionsabstand berücksichtigt werden.

Die Ermittlung des optimalen, individuellen Designs für ein progressives Brillenglas, zum Beispiel ein Nahglas kann durch ein entsprechendes Computerprogramm (zum Beispiel das Beratungsprogramm Impression Consulting der Firma Rodenstock GmbH, in welchem ein entsprechendes Design-Beratungsmodul integriert ist) unterstützt werden.

Das Computerprogramm kann die Möglichkeit bieten, den Brillenträger bei der Designwahl zu beraten und die Designparameter festzulegen. Das Computerprogramm kann das endgültige Design und insbesondere die dem endgültigen Design zugeordnete räumliche Verteilung einer oder mehrerer optischer Eigenschaften (zum Beispiel Sollastigmatismusverteilung), welche als Zielwerte in die Zielfunktion eingehen, automatisch berechnen.

Der Benutzer kann über eine oder mehrere (interaktiven) graphische Benutzerschnittstellen, welche einen oder mehreren Abschnitten oder Menüs umfassen, mit dem Computerprogramm interagieren.

Eine graphische Benutzerschnittstelle kann zum Beispiel ausgelegt werden, die Performance oder die optischen Eigenschaften eines individuell optimierten Nahglases gegenüber einem Gleitsichtglas und einer normalen Lesebrille darzustellen oder anzuzeigen. Zur Unterstützung der Auswahl und der Beratung kann ein Info-Text zum jeweiligen Produkt eingeblendet werden, sobald einer der Info-Buttons aktiviert wird. Unter einem Menü kann das gewünschte Design mit dem Anwendungsschwerpunkt "Raum", "Zwischenbereich" oder "Nähe" (oder andere Anwendungsschwerpunkte) ausgewählt werden. Die Addition des Brillenträgers kann zum Beispiel an einem Schieberegler eingestellt werden. Um den Einfluss der individuellen Parameter zu zeigen, können diese in einer Maske durch Betätigen eines entsprechenden Schiebereglers oder durch manuelle Eingabe der Werte verändert werden.

Die individuellen Präferenzen des Brillenträgers können über die in Fig. 12 gezeigte graphische Benutzerschnittstelle "Design Profiler" 60 erfasst werden. Im "Design Profiler" 60 werden die individuellen Bedürfnisse und Wünsche des Brillenträgers erfasst, damit sie gemeinsam mit den individuellen Parametern sowie den Fassungs- und Zentrierdaten bei der Ermittlung des individuellen Designs für ein Nahglas berücksichtigt werden können. Durch die Vergabe der Punkte kann der Brillenträger die Entfernungsbereiche "Raum", "Mitte" (oder "Zwischenbereich") und "Nähe" seinen persönlichen Nahsehanforderungen entsprechend gewichten. Je wichtiger dem Kunden der jeweilige Entfernungsbereich ist, bzw. je häufiger seine Tätigkeiten in den Bereich fallen, desto mehr Punkte können für diesen Entfernungsbereich vergeben werden.

In einem Beispiel können maximal fünf Punkte pro Entfernungsbereich verteilt werden, insgesamt jedoch nicht mehr als zehn Punkte. Die Gewichtung bestimmt das individuelle Designprofil des Brillenträgers. Je stärker ein bestimmter Entfernungsbereich bevorzugt wird, umso ausgeprägter spiegelt sich dieser in den Sehbereichen des Glases wieder (Designempfehlung). Je mehr Punkte für den Raum vergeben werden, umso mehr Raumtiefe (Degression) erhält das empfohlene Glasdesign. Jeweils fünf verschiedene Piktogramme für die Raum-, Zwischen- und Nahdistanz symbolisieren die Bereiche, die der Kunde bei der Wahl seines Designprofils gegeneinander abwägen soll. Die Piktogramme dienen als Beispiele für den jeweiligen Entfernungsbereich und stellen nur eine kleine Auswahl aller möglichen Tätigkeiten für diese Entfernung dar. Die Balken verdeutlichen die Ausprägung der drei Sehbereiche im Glas.

Das Ergebnis der Designermittlung oder der Designempfehlung in Abhängigkeit von den erfassten individuellen Daten und Präferenzen des Brillenträgers kann beim Öffnen einer Ergebnismaske bzw. einer graphischen Benutzerschnittstelle dargestellt werden. Beispiele solcher Ergebnismasken oder graphischen Benutzerschnittstellen sind in Fig. 6 bis 8 und 13 bis 15 dargestellt. Zur Designempfehlung gehören insbesondere die Ergonomieparameter, Designcharakteristik und Hauptsehentfernungen, sowie die Designparameter, Designpunkt Mitte DM und Designpunkt Nähe DN.

Die Designcharakteristik beschreibt die Anordnung und Größe der binokularen Sehbereiche im Glas. Die Hauptsehentfernungen und die Designcharakteristik spiegeln die Punktevergabe im Design Profiler 60 wieder. Die Position der Designpunkte Mitte DM und Nähe DN ist abhängig von der Designcharakteristik, den Fassungs- und Zentrierdaten sowie den individuellen Parametern, Vorneigung und Hornhautscheitelabstand.

Auf der rechten Seite der in den Figuren 6 bis 8 und 13 bis 15 gezeigten Ergebnismasken 40A bis 40F wird das Designdreieck dargestellt. Die Ecken des Designdreiecks 10 stehen für die drei Entfernungsbereiche "Raum", "Mitte" (oder "Zwischenbereich") und "Nähe". Die Position des kleinen Dreiecks 12 innerhalb des Designdreiecks ergibt die Designempfehlung, welche die Gewichtung im Design Profiler widerspiegelt. Je stärker zum Beispiel der Entfernungsbereich "Mitte" im Profiler gewichtet wurde, umso weiter ist das kleine Dreieck zur Ecke "Mitte" hin versetzt. Dies gilt auch analog auch für die beiden anderen Ecken "Nähe" und "Raum" des Designdreiecks.

Die Gewichtung der drei Entfernungsbereiche spiegelt sich in der Ausprägung der entsprechenden Sehbereiche im Brillenglas wieder. Je stärker der Entfernungsbereich "Raum" gewichtet wird, umso breiter ist der nutzbare Sehbereich im oberen Teil des Brillenglases und umso größer ist die Schärfentiefe bzw. Degression des Brillenglases. Wird im Design Profiler 60 der Schwerpunkt auf den Entfernungsbereich "Nähe" gelegt, so ist die Schärfentiefe im Glas geringer, die Sehbereiche sind jedoch extrem breit. Der Brillenträger kann mit einem solchen Brillenglas zum Beispiel sehr lange entspannt lesen.

Die Designempfehlung kann durch die Auswahl der Buttons "Empfehlung übernehmen" und "Daten speichern" übernommen werden. Es ist jedoch möglich, das empfohlene Design weiter abzuändern. Dies wird als "Designtuning" bezeichnet.

So kann durch Verschieben des kleinen Dreiecks innerhalb des Designdreiecks die Designempfehlung modifiziert werden. Da die Designempfehlung die Anordnung und Größe der Sehbereiche im Brillenglas (Designcharakteristik), die Hauptsehentfernungen sowie die Lage der Designpunkte DM und DN beinhaltet, verändern sich analog durch Verschieben des kleinen Dreiecks alle Parameter. Die Veränderungen spiegeln sich in der Sehbereichsdarstellung wieder. So können die Veränderungen der Designpunkte DM und DN, etc. farblich oder in andere Weise hervorgehoben werden.

Ferner kann die Lage der Designpunkte und die Hauptsehentfernungen unabhängig voneinander, jedoch vorzugsweise innerhalb definierter, sinnvoller Grenzen, verändert werden.

Beispiel

Aufgrund von Angaben der Brillenträger vergibt der Augenoptiker folgende Punktezahl im Design Profiler 60: Raum: 0 Punkte, Mitte: 0 Punkte, Nähe: 5 Punkte. In der Designempfehlung ergibt sich eine Designcharakteristik von 9/9/80 (9 = Raum / 9 = Mitte / 80 = Nähe). Es ergeben sich folgende Hauptsehentfernungen: Raum,: 78 cm / Mitte: 58cm / Nähe: 40 cm. Der Brillenträger sagt ferner im Beratungsgespräch, dass der Laptop, an dem er arbeitet in ca. 50 cm Entfernung steht. Der Augenoptiker kann dann die gewünschte Hauptsehentfernung im Designtuner in das dafür vorgesehene Feld eintragen. Das geeignete Design wird dann automatisch berechnet.

Das individuell an das Kundenprofil angepasste Design kann durch Betätigung des entsprechenden Design Buttons ("Tunerwerte übernehmen" und "Daten speichern") übernommen werden. Über den Button "Designempfehlung" besteht die Möglichkeit, zurück zur Designempfehlung zu gehen.

Wenn das individuelle Design für das progressive Brillenglas (zum Beispiel für ein individuelles Nahglas) endgültig festgelegt ist, wird das Brillenglas berechnet bzw. optimiert. Die Berechnung bzw. Optimierung des individuellen Brillenglases kann, wie bereits beschrieben, mittels einer iterativen Minimierung einer Zielfunktion erfolgen. Als Zielwerte in der Zielfunktion gehen die dem ermittelten individuellen Design zugeordneten Sollastigmatismuswerte und gegebenenfalls andere optische Eigenschaften ein.

Die individuelle Optimierung erfolgt für jede Wirkung (Sphäre und/oder Zylinder und/oder Prisma). Ferner kann die Optimierung unter Berücksichtigung von zuvor erfaßten individuellen Daten des Brillenträgers, zum Beispiel nach dem optimierten Retina Fokus Prinzip, erfolgen. Die individuellen Daten des Brillenträgers können zum Beispiel die Pupillendistanz PD, den Inset, den Hornhautscheitelabstand HSA, den Fassungsscheibenwinkel FSW, die Vorneigung, den Designpunkt Nähe DN, die eventuell vorhandene Anisometropie, Fassungs- und/oder Zentrierdaten, etc. umfassen. Das (individuell) optimierte Brillenglas wird in Gebrauchsstellung mittels Wellenfronten berechnet. Das Brillenglas kann im Hinblick auf eine Minimierung der HOA (High Order Aberration) und unter Berücksichtigung der Listing'schen Regel optimiert werden.

Die Vorderfläche des optimierten Brillenglases kann eine sphärische Fläche sein, die Rückfläche eine individuelle optimierte progressive Fläche. Die Basiskurve der Vorderfläche kann im wesentlichen frei ausgewählt werden. Insbesondere kann die Basiskurve an die Muschelung der Fassung angepasst werden. Die individuellen Brillengläser können mittels Freiformtechnologie hergestellt werden.

Das Brillenglas kann aus einem hochbrechenden optischen Material (zum Beispiel aus einem Material mit einem Brechungsindex von 1.6) gefertigt werden. Das aus einem solchen Material hergestellte Brillenglas ist ästhetisch dünn und zudem gut für Bohrbrillen geeignet.

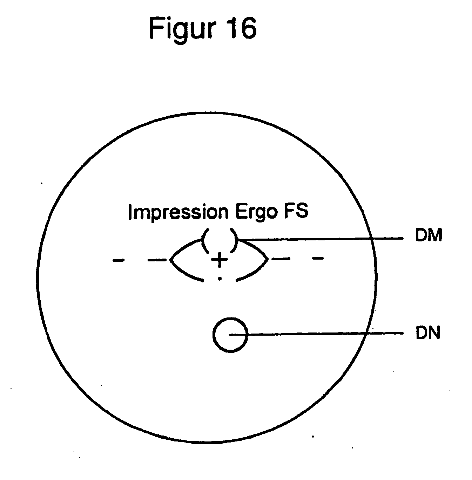

Das Brillenglas kann mit einer Stempelung versehen werden. Ein Beispiel für eine Stempelung eines individuellen Nahglases ist in Fig. 16 gezeigt.

Der Stempel 70 des individuellen Nahglases besteht aus "beweglichen" und "fixen" Bestandteilen. Die Klammern, die die Lage des Designpunktes Mitte DM kennzeichnen, und der Nahmesskreis, der die Lage des Designpunktes Nähe DN kennzeichnet, gehören zu den "beweglichen" Bestandteilen der Stempelung. Die Lage der Designpunkte variieren in Abhängigkeit von den ermittelten Designparametern und den individuellen Parametern des Brillenträgers. Die horizontale Position des Nahmesspunktes variiert auch in Abhängigkeit vom Inset, der sich individuell, nach Bestelleingang und in Abhängigkeit der Refraktionsdaten, der individuellen Parameter und des Leseabstandes ergibt.

In Ausnahmefällen kann die Stempelung von der oben gezeigten abweichen. Die Designpunkte sind dann nicht explizit gekennzeichnet. Diese können jedoch mithilfe einer Zentrierkarte und den aufgestempelten Skalen in 1 mm Schritten und der Angabe auf der Brillenglastüte rekonstruiert werden. Ferner sind die Werte für die Lage von DM/DN unterhalb der nasalen Gravur für Basiskurve und Brechungsindex ins Glas eingraviert.

Das oben beschriebene, beispielhafte Verfahren zur Ermittlung eines Designs für ein individuelles Nahglas kann selbstverständlich auch für die Ermittlung eines Designs für ein universelles, (individuelles) progressives Brillenglas mit einem Fern-, einem Zwischen- und einem Nahbereich sinngemäß angewandt werden. Die festgelegten Designs (Eckdesigns und gegebenenfalls zusätzliche Designs) des Designdreiecks stellen dann unterschiedliche Designs (z.B. in Abhängigkeit von unterschiedlichen Anwendungsschwerpunkten) für universelle progressive Brillengläser dar. Anstelle der Designparameter (zum Beispiel Designpunkt Mitte DM, Designpunkt Nähe DN), welche ein Design für ein individuelles Nahglas charakterisieren, treten dann Designparameter (zum Beispiel Designpunkt Ferne DF, Designpunkt Nähe DM), welche ein Design für ein universelles progressives Brillenglas charakterisieren.

Ebenfalls können nach dem oben beschriebenen Verfahren, Designs für nicht individuelle progressive Brillengläser (universelle progressive Brillengläser oder spezielle progressive Brillengläser wie Nahgläser) ermittelt werden.

**Patentansprüche**

1.  Computergestütztes Verfahren zum Ermitteln bzw. Berechnen von Designparametern $D^j, j = 1,..., M$ , eines Designs eines progressiven Brillenglases anhand eines vorgegebenen Designvielecks (10), wobei:

    - jeder Punkt $P$ innerhalb des Designvielecks (10) jeweils ein Design bezeichnet bzw. bestimmt und das Design an dem Punkt $P$ durch Designwerte $D^j(P)$ charakterisiert ist;
    - Designwerte $D^j(P_{Eck})$ , $j =1,..., M,$ der Designparameter, welche das Design an jeweiligen Eckpunkten $P_{Eck}$ des Designvielecks (10) charakterisieren, vorgegeben bzw. vorgebbar sind;
    - optional Werte $D^j(P_{Zusatz})$ der Designparameter, welche das Design an zumindest einem zusätzlichen Punkt $P_{Zusatz}$ innerhalb des Designvielecks (10) charakterisieren, vorgegeben bzw. vorgebbar sind;

    wobei das Verfahren die Schritte umfasst

    - Vorgeben eines Punktes $P_{Desgin}$ innerhalb des Designvielecks (10), wobei der Punkt $P_{Desgin}$ das zu ermittelnde Design bestimmt;
    - Ermitteln eines Werts $D^j(P_{Design})$ eines jeden Designparameters $D^j$, $j =1,..., M$, des zu ermittelnden Designs an dem Punkt $P_{Design}$ mittels einer Interpolation zumindest eines Teils der vorgegebenen Werte $D^j(P_{Eck})$, $j=1,..., M$ an den Eckpunkten $P_{Eck}$ und gegebenenfalls zumindest eines Teils der vorgegebenen Werte $D^j(P_{Zusatz})$ des Designparameters $D^j$ an dem zumindest einem zusätzlichen Punkt $P_{Zusatz}$

    und wobei $M$ die Anzahl der Designparameter bezeichnet.

2.  Verfahren gemäß Anspruch 1, wobei die Interpolation eine zumindest abschnittsweise lineare Interpolation ist.

3.  Verfahren nach einem der vorangegangenen Ansprüche, wobei das Designvieleck (10) ein Designdreieck, vorzugsweise ein gleichseitiges Designdreieck ist.

4.  Verfahren nach einem der vorangegangenen Ansprüche, wobei die Werte $D^j(P_{Zusats})$ der Designparameter $D^j, j =1...M$ , an jeweils zumindest einem Zusatzpunkt $P_{Zusatz}$ auf jeder der Seitenkanten des Designvietecks (10) vorgegeben bzw. vorgebbar sind.

5.  Verfahren nach einem der vorangegangenen Ansprüche, wobei

    - die Werte $D^j(P_{Zentral})$ der Designparameter $D^j$, $j =1,..., M$ , welche das Design an einem Zentralpunkt $P_{Zentral}$ innerhalb des Designvielecks (10) charakterisieren, vorgegeben bzw. vorgebbar sind; und wobei
    - der Wert $D^j(P_{Design})$ eines jeden Designparameters $D^j$ an dem Punkt $P_{Design}$ mittels einer Interpolation zumindest eines Teils der vorgegebenen Werte $D^j(P_{Eck})$ des Designparameters $D^j$ an den Eckpunkten $P_{Eck}$ und des Werts $D^j(P_{Zentral})$ des Designparameters $D^j$ an dem Zentralpunkt $P_{Zentral}$ berechnet wird.

6.  Verfahren gemäß Anspruch 5, wobei die Interpolation folgende Schritte umfasst:

    - Ermitteln des Durchstoßpunkts $P_{Durchsto\beta}$ in Richtung des Vektors $P_{Zentral}P_{Design}$ der durch den Zentralpunkt $P_{Zentral}$ und den Punkt $P_{Design}$ verlaufenden Gerade mit einer der Seitenkanten des Designvielecks (10), wobei der Vektor $P_{Zentral}P_{Design}$ von dem Zentralpunkt $P_{Zentral}$ startet und an dem Punkt $P_{Design}$ endet;
    - Ermitteln der beiden nächstliegenden Punkte $P_{NL1}$ und $P_{NL2}$ auf der Seitenkante des Designvielecks (10), auf welcher auch der Durchstoßpunkt $P_{Durchsto\beta}$ liegt, in welchen entsprechende Werte $D^j(P_{NL1})$ bzw. $D^j(P_{NL2})$ des Designparameters $D^j$ vorgegebenen sind, wobei der Durchstoßpunkt $P_{Durchsto\beta}$ zwischen den beiden Punkten $P_{NL1}$ und $P_{NL2}$ auf der Seitenkante des Designvielecks (10) liegt;
    - Ermitteln des Werts $D^j(P_{Durchsto\beta})$ des Designparameters $D^j$ an dem Durchstoßpunkt $P_{Durchsto\beta}$ mittels einer ersten Interpolation der Werte der Designparameter $D^j(P_{NL1})$ und $D^j(P_{NL2})$ an den beiden Punkten $P_{NL1}$ und $P_{NL2}$;
    - Ermitteln des Werts $D^j(P_{Design})$ des Designparameters $D^j$ an dem Punkt $P_{Design}$ mittels einer zweiten Interpolation des ermittelten Werts $D^j(P_{Durchsto\beta})$ des Designparameters $D^j$ an dem Durchstoßpunkt $P_{Durchsto\beta}$ und dem Wert $D^j(P_{Zentral})$ des Designparameters $D^j$ an dem Zentralpunkt $P_{Zentral}$.

7.  Verfahren gemäß Anspruch 6, wobei die Interpolation in einem Polar-Koordinatensystem $\{\varphi,\rho\}$ erfolgt, wobei der Ursprung des Koordinatensystems mit dem Zentralpunkt $P_{Zentral}$ zusammenfällt, und wobei die erste Interpolation eine Interpolation, vorzugsweise eine lineare Interpolation, nach der Polar-Koordinate $\varphi$ ist und die zweite Interpolation eine Interpolation, vorzugsweise eine lineare Interpolation, nach der Polar-Koordinate p ist.

8.  Verfahren gemäß Anspruch 7, wobei

    - für die erste Interpolation gilt:

$$D^j(P_{Durchstoß}) = D^j(P_{NL1}) + \frac{D^j(P_{NL2}) - D^j(P_{NL1})}{(\varphi_{NL2} - \varphi_{NL1})} (\varphi - \varphi_{NL1});$$

    und
    - für die zweite Interpolation gilt:

$$D^j(P_{Design}) = D^j(P_{Durchstoß}) + \frac{D^j(P_{Zentral}) - D^j(P_{Durchstoß})}{\rho} (\rho_S - \rho_i)$$

    oder

$$D^j(P_{Design}) = D^j(P_{Durchstoß}) + (D^j(P_{Zentral}) - D^j(P_{Durchstoß})(1 - \alpha)$$

    wobei:

    $(\varphi, \rho)$ die Polarkoordinaten des Punkts $P_{Design}$ bezeichnet;
    $(\varphi_{NL1}, \rho_{NL2})$ und $(\varphi_{NL2}, \rho_{NL2})$ die Polarkoordinaten der beiden nächstliegenden Punkte $P_{NL1}$ und $P_{NL2}$ bezeichnen, wobei die Bedingung $\varphi_{NL1} \le \varphi \le \varphi_{NL2}$ gilt;
    $\rho_s$ den Abstand des Punkts $P_{Durchstoß}$ von dem Zentralpunkt $P_{Zentral}$ bezeichnet;
    $D^j(P_{NL1})$ und $D^j(P_{NL2})$ jeweils Werte des Designparameters $D^j$ an den Punkten $P_{NL1}$ bzw. $P_{NL2}$ bezeichnen, wobei die Punkte $P_{NL1}$ und $P_{NL2}$ die dem Punkt $P_{Design}$ nächstliegenden Punkte darstellen, zu welchen die Designparameter $D^j$ vorgegeben sind; und
    $D^j(P_{Zentral})$ den Wert des Designparameters $D^j$ in dem Zentralpunkt $P_{Zentral}$ bezeichnet.

9.  Verfahren nach einem der vorangegangenen Ansprüche, wobei die Designparameter $D^j$ einen oder mehrere der folgenden Parameter umfassen:

    - Gewichtung des Fernteils;
    - Gewichtung des Nahteils;
    - Gewichtung des Progressionsteils;
    - Gewichtung Dynamik;
    - Anwendungsschwerpunkte des Brillenglases;
    - Parameter, welche die Lage des Fern-, Nah- und/oder Progressionsteils bestimmen;
    - räumliche Position des Fern- und/oder des Nahbezugs- bzw. Designpunkts;
    - Parameter, welche den Verlauf der Objektabstandsfunktion bestimmen;
    - Parameter, welche den Verlauf einer oder mehrerer Sollisoastigmatismuslinien bestimmen;
    - maximal zulässige Abbildungsfehler, insbesondere maximal zulässiger Refraktionsfehler, und/oder maximal zulässiger Astigmatismusfehler, und/oder maximal zulässiger Astigmatismusgradient.

10. Vorrichtung zum Ermitteln bzw. Berechnen von Designparametem $D^j$, j = 1,...,M eines Designs für ein progressives Brillenglas, umfassend:

    - Designvieleck-Speichermittel zum Speichern von Daten eines vorgegebenen Designvielecks (10), wobei jeder Punkt $P$ innerhalb des Designvielecks (10) jeweils ein Design bezeichnet bzw. bestimmt und das Design an dem Punkt $P$ durch Designwerte $D^j(P)$ charakterisiert ist; wobei die Designvieleck-Speichermittel umfassen:

- Eckdesign-Speichermittel zum Speichern der Designwerte $D^j(P_{Eck})$, $j = 1,...,M$ der Designparameter, welche das Design an dem jeweiligen Eckpunkt $P_{Eck}$ des Designvielecks (10) charakterisieren, und
- optional zusätzliche Speichermittel zum Speichern der Werte $D^j(P_{Zusatz})$ der Designparameter, welche das Design an zumindest einem zusätzlichen Punkt $P_{Zusatz}$ innerhalb des Designvielecks (10) charakterisieren,

- Designparameterberechnungsmittel, welche ausgelegt sind, das Verfahren zum Ermitteln bzw. Berechnen der Designparameter $D^j$, $j =1...M$, des zu berechnenden Designs gemäß einem der Ansprüche 1 bis 9 anhand des gespeicherten vorgegebenen Designvielecks (10) durchzuführen.

11. Computerprogrammerzeugnis, welches ausgelegt ist, wenn geladen und ausgeführt auf einem Computer, ein Verfahren zum Ermitteln bzw. Berechnen der Designparameter $D^j$, $j =1,...,M$, eines Designs für ein progressives Brillenglas gemäß einem der Ansprüche 1 bis 9 durchzuführen.

12. Computergestütztes Verfahren zum Ermitteln bzw. Berechnen eines Designs für ein progressives Brillenglas anhand eines vorgegebenen Designvielecks (10), wobei:

- jeder Punkt $P$ innerhalb des Designvielecks (10) jeweils ein Design bezeichnet bzw. bestimmt und das Design an dem Punkt $P$ durch Designwerte $D^j(P)$ charakterisiert ist;
- Designwerte $D^j(P_{Eck})$ $j =1,..., M$, der Designparameter, welche das Design an jeweiligen Eckpunkten $P_{Eck}$ des Designvielecks (10) charakterisieren, vorgegeben bzw. vorgebbar sind; und
- optional die Werte $D^j(P_{Zusatz})$ der Designparameter, welche das Design an zumindest einem zusätzlichen Punkt $P_{Zusatz}$ innerhalb des Designvielecks (10) charakterisieren, vorgegeben bzw. vorgebbar sind;

wobei das Verfahren umfasst:

- Ermitteln bzw. Berechnen der Designparameter für ein progressives Brillenglas gemäß dem Verfahren nach einem der Ansprüche 1 bis 9;
- Berechnen eines Designs anhand der ermittelten Designparameter.

13. Verfahren gemäß Anspruch 12, ferner umfassend ein Abändern des ermittelten Designs, wobei das Abändern interaktiv in einem Dialog mit einem Benutzer und/oder automatisch anhand von individuellen Daten und/oder Präferenzen eines Brillenträgers erfolgt.

14. Verfahren gemäß Anspruch 13, ferner umfassend Visualisieren der räumlichen Lage des abgeänderten Designs innerhalb des Designvielecks (10).

15. Computerprogrammerzeugnis, welches ausgelegt ist, wenn geladen und ausgeführt auf einem Computer, ein Verfahren zum Ermitteln bzw. Berechnen eines Designs für ein progressives Brillenglas anhand eines vorgegebenen Designvielecks (10) gemäß einem der Ansprüche 12 bis 14 durchzuführen.

16. Vorrichtung zum Ermitteln bzw. Berechnen eines Designs für ein progressives Brillenglas, umfassend:

- Designvieleck-Speichermittel zum Speichern von Daten eines vorgegebenen Designvielecks (10), wobei jeder Punkt $P$ innerhalb des Designvielecks (10) jeweils ein Design bezeichnet bzw. bestimmt und das Design an dem Punkt $P$ durch Designwerte $D^j(P)$ charakterisiert ist; wobei die Designvieleck-Speichermittel umfassen:

- Eckdesign-Speichermittel zum Speichern der Designwerte $D^j(P_{Eck})$, $j =1,..., M$ der Designparameter, welche das Design an dem jeweiligen Eckpunkt $P_{Eck}$ des Designvielecks (10) charakterisieren, und
- optional zusätzliche Speichermittel zum Speichern der Werte $D^j(P_{Zusatz})$, der Designparameter, welche das Design an zumindest einem zusätzlichen Punkt $P_{Zusatz}$, innerhalb des Designvielecks (10) charakterisieren,

- Designberechnungsmittel, welche ausgelegt sind, ein Design für das progressive Brillenglas nach dem Verfahren zum Erzeugen bzw. Berechnen eines Designs für ein progressives Brillenglas gemäß einem der Ansprüche 12 bis 14 zu berechnen.

17. Computergestütztes Verfahren zum Herstellen eines progressiven Brillenglases umfassend:

- Ermitteln bzw. Berechnen eines Designs für ein progressives Brillenglas gemäß dem Verfahren zum Ermitteln bzw. Berechnen eines Designs für ein progressives Brillenglas anhand eines vorgegebenen Designvielecks (10) nach einem der Ansprüche 12 bis 14,
- Berechnen bzw. Optimieren des Brillenglases nach dem berechneten Brillenglasdesign.

18. Verfahren gemäß Anspruch 17, wobei das Berechnen bzw. Optimieren des Brillenglases eine Minimierung der Zielfunktion:

$$F(\bar{x}) = \sum_{i=1}^{m} \left[ g_{i,Ast} (Ast_i - Ast_{i,Soll})^2 + \ldots \right]$$

umfasst, wobei

$Ast_{i,Soll}$ den Sollwert der lokalen astigmatischen Abweichung bzw. des lokalen astigmatischen Fehlers an der $i$ -ten Bewertungsstelle;
$Ast_i$ den tatsächlichen Wert der lokalen astigmatischen Abweichung bzw. des lokalen astigmatischen Fehlers an der $i$ -ten Bewertungsstelle;
$g_{i,Ast}$ die lokale Gewichtung der astigmatischen Abweichung bzw. des lokalen astigmatischen Fehlers an der i -ten Bewertungsstelle

bezeichnen.

19. Vorrichtung zum Herstellen eines progressiven Brillenglases, umfassend:

- Designberechnungsmittel, welche ausgelegt sind, ein Design für das progressive Brillenglas nach dem Verfahren zum Erzeugen bzw. Berechnen eines progressiven Brillenglasdesigns gemäß einem der Ansprüche 12 bis 14 zu berechnen; und
- Optimierungs- bzw. Berechnungsmittel, welche ausgelegt sind, ein Berechnen bzw. Optimieren des Brillenglases nach dem berechneten Design durchzuführen.

20. Computerprogrammerzeugnis, welches ausgelegt ist, wenn geladen und ausgeführt auf einem Computer, ein Verfahren zum Berechnen und Optimieren eines progressiven Brillenglases durchzuführen, wobei das Verfahren folgende Schritte umfasst:

- Berechnen eines Designs für das progressive Brillenglas nach dem Verfahren zum Erzeugen bzw. Berechnen eines progressiven Brillenglasdesigns gemäß einem der Ansprüche 12 bis 14;
- Berechnen bzw. Optimieren des progressiven Brillenglases nach dem berechneten Design.

**Claims**

1. Computer-assisted method for determining or calculating design parameters $D^j$, $j = 1,..., M$, of a design of a progressive spectacle lens by means of a prescribed design polygon (10), wherein:

- each point $P$ within the design polygon (10) respectively describes or determines a design and the design at the point $P$ is **characterised by** design values $D^j(P)$;
- design values $D^j(P_{corner})$, $j = 1,..., M$, of the design parameters which characterise the design at respective corner points $P_{corner}$ of the design polygon (10) are prescribed or can be prescribed;
- optional values $D^j(P_{addition})$ of the design parameters which characterise the design at at least one additional point $P_{addition}$ within the design polygon (10) are prescribed or can be prescribed;

wherein the method comprises the steps:

- prescribing a point $P_{design}$ within the design polygon (10), wherein the point $P_{design}$ determines the design to be determined;
- determining a value $D^j(P_{design})$ of each design parameter $D^j$, $j = 1,..., M$, of the design to be determined at the point $P_{design}$ by means of an interpolation of at least a part of the prescribed values $D^j(P_{corner})$, $j = 1,...,M$ at the corner points $P_{corner}$ and possibly at least a part of the prescribed values $D^j(P_{addition})$ of the design parameter $D^j$ at the at least one additional point $P_{addition}$

and wherein $M$ describes the number of design parameters.

2. Method according to claim 1, wherein the interpolation is a linear interpolation at least in portions.

3. Method according to one of the preceding claims, wherein the design polygon (10) is a design triangle, preferably an equilateral design triangle.

4. Method according to one of the preceding claims, wherein the values $D^j(P_{addition})$ of the design parameters $D^j$, $j = 1,...,M$, at respectively at least one addition point $P_{addition}$ on each of the side edges of the design polygon (10) are prescribed or can be prescribed.

5. Method according to one of the preceding claims, wherein

   - the values $Dj(P_{central})$ of the design parameters $D^j$, $j = 1,...,M$, which characterise the design at a central point $P_{central}$ within the design polygon (10) are prescribed or can be prescribed;
   and wherein
   - the value $D^j(P_{design})$ of each design parameter $D^j$ at the point $P_{design}$ is calculated by means of an interpolation of at least a part of the prescribed values $D^j(P_{corner})$ of the design parameter $D^j$ at the corner points $P_{corner}$ and of the value $D^j(P_{central})$ of the design parameter $D^j$ at the central point $P_{central}$ is calculated.

6. Method according to claim 5, wherein the interpolation comprises the following steps:

   - determining the intersection point $P_{intersection}$ in the direction of the vector $P_{central}P_{design}$ of the straight line extending through the central point $P_{central}$ and the point $P_{design}$ with one of the side edges of the design polygon (10), wherein the vector $P_{centra}P_{design}$ starts from the central point $P_{central}$ and ends at the point $P_{design}$;
   - determining the two closest points $P_{NL1}$ and $P_{NL2}$ on the side edge of the design polygon (10) on which also the intersection point $P_{intersection}$ is situated, in which points corresponding values $D^j(P_{NL1})$ or $D^j(P_{NL2})$ of the design parameter $D^j$ are prescribed, wherein the intersection point $P_{intersection}$ between the two points $P_{NL1}$ and $P_{NL2}$ is situated on the side edge of the design polygon (10);
   - determining the value $D^j(P_{intersection})$ of the design parameter D at the intersection point $P_{intersection}$ by means of a first interpolation of the values of the design parameters $D^j(P_{NL1})$ and $D^j(P_{NL2})$ at both points $P_{NL1}$ and $P_{NL2}$;
   - determining the value $D^j(P_{design})$ of the design parameter $D^j$ at the point $P_{design}$ by means of a second interpolation of the determined value $D^j(P_{intersection})$ of the design parameter D at the intersection point $P_{intersection}$ and the value $D^j(P_{central})$ of the design parameter $D^j$ at the central point $P_{central}$.

7. Method according to claim 6, wherein the interpolation is effected in a polar coordinate system ($\varphi$, $\rho$), wherein the origin of the coordinate system coincides with the central point $P_{central}$ and wherein the first interpolation is an interpolation, preferably a linear interpolation, for the polar coordinate $\varphi$ and the second interpolation is an interpolation, preferably a linear interpolation, for the polar coordinate $\rho$.

8. Method according to claim 7, wherein

   - there applies for the first interpolation:

$$D^j(P_{intersection}) = D^j(P_{NL1}) + \frac{D^j(P_{NL2}) - D^j(P_{NL1})}{(\varphi_{NL2} - \varphi_{NL1})}(\varphi - \varphi_{NL1});$$

   and
   - there applies for the second interpolation:

$$D^j(P_{design}) = D^j(P_{intersection}) + \frac{D^j(P_{central}) - D^j(P_{intersection})}{\rho} (\rho_S - \rho_i)$$

or

$$D^j(P_{design}) = D^j(P_{intersection}) + D^j(P_{central}) - D^j(P_{intersection}) (1 - \alpha)$$

wherein:

$(\varphi, p)$ describes the polar coordinates of the point $P_{design}$;

$(\varphi_{NL1}, \rho_{NL2})$ and $(\varphi_{NL2}, \rho_{NL2})$ describe the polar coordinates of the two closest points $P_{NL1}$ and $P_{NL2}$, wherein the condition $\varphi_{NL1} \leq \varphi \ \varphi_{NL2}$ applies;

$\rho_s$ describes the spacing of the point $P_{intersection}$ from the central point $P_{central}$;

$D^j(P_{NL1})$ and $D^j(P_{NL2})$ respectively describe values of the design parameter $D^j$ at the points $P_{NL1}$ or $P_{NL2}$, wherein the points $P_{NL1}$ and $P_{NL2}$ represent the points closest to the point $P_{design}$ for which the design parameters $D^j$ are prescribed; and

$D^j(P_{central})$ describes the value of the design parameter $D^j$ in the central point $P_{central}$.

9. Method according to one of the preceding claims, wherein the design parameters $D^j$ comprise one or more of the following parameters:

- weighting of the distance zone;
- weighting of the near zone;
- weighting of the progression zone;
- weighting dynamics;
- centres of use of the spectacle lens;
- parameters which determine the position of the distance-, near- and/or progression zone;
- spatial position of the distance- and/or of the near reference-or design point;
- parameters which determine the course of the object distance function;
- parameters which determine the course of one or more reference isoastigmatism lines;
- maximum permissible imaging errors, in particular maximum permissible refraction error, and/or maximum permissible astigmatism error, and/or maximum permissible astigmatism gradient.

10. Device for determining or calculating design parameters $D^j, j = 1,..., M$ of a design for a progressive spectacle lens, comprising:

- design polygon storage means for storing data of a prescribed design polygon (10), wherein each point $P$ within the design polygon (10) respectively describes or determines a design and the design at the point $P$ is **characterised by** design values $D^j(P)$; wherein the design polygon storage means comprise:

- corner design storage means for storing the design values $D^j(P_{corner})$, $j = 1,..., M$ of the design parameters which characterise the design at the respective corner point $P_{corner}$ of the design polygon (10) and
- optionally additional storage means for storing the values $D^j(P_{addition})$ of the design parameters which characterise the design at at least one additional point $P_{addition}$ within the design polygon (10),

- design parameter calculation means which are designed to implement the method for determining or calculating the design parameters $D^j, j = 1,..., M$, of the design to be calculated according to one of the claims 1 to 9 by means of the stored prescribed design polygon (10).

11. Computer programme product which is designed, when loaded and run on a computer, to implement a method for determining or calculating the design parameters $D^j, j = 1,..., M$, of a design for a progressive spectacle lens according to one of the claims 1 to 9.

12. Computer-assisted method for determining or calculating a design for a progressive spectacle lens by means of a prescribed design polygon (10), wherein:

- each point *P* within the design polygon (10) respectively describes or determines a design and the design at the point *P* is **characterised by** design values $D^i(P)$;
- design values $D^j(P_{corner})$, *j* = 1,..., *M*, of the design parameters which characterise the design at respective corner points $P_{corner}$ of the design polygon (10) are prescribed or can be prescribed; and
- optionally the values $D^j(P_{addition})$ of the design parameters which characterise the design at at least one additional point $P_{addition}$ within the design polygon (10) are prescribed or can be prescribed;

wherein the method comprises:

- determining or calculating the design parameters for a progressive spectacle lens according to the method according to one of the claims 1 to 9;
- calculating a design by means of the determined design parameters.

**13.** Method according to claim 12, comprising furthermore a modification of the determined design, wherein the modification is effected interactively in a dialogue with a user and/or automatically by means of individual data and/or preferences of a spectacle wearer.

**14.** Method according to claim 13, comprising furthermore visualisation of the spatial position of the modified design within the design polygon (10).

**15.** Computer programme product which is designed, when loaded and run on a computer, to implement a method for determining or calculating a design for a progressive spectacle lens by means of a prescribed design polygon (10) according to one of the claims 12 to 14.

**16.** Device for determining or calculating a design for a progressive spectacle lens, comprising:

- design polygon storage means for storing data of a prescribed design polygon (10), wherein each point *P* within the design polygon (10) respectively describes or determines a design and the design at the point *P* is **characterised by** design values $D^i(P)$; wherein the design polygon storage means comprise:

- corner design storage means for storing the design values $D^j(P_{corner})$, *j* = 1,..., *M*, of the design parameters which characterise the design at the respective corner point $P_{corner}$ of the design polygon (10), and
- optionally additional storage means for storing the values $D^j(P_{addition})$ of the design parameters which characterise the design at at least one additional point $P_{addition}$ within the design polygon (10),

- design calculation means which are designed to calculate a design for the progressive spectacle lens according to the method for producing or calculating a design for a progressive spectacle lens according to one of the claims 12 to 14.

**17.** Computer-assisted method for producing a progressive spectacle lens comprising:

- determining or calculating a design for a progressive spectacle lens according to the method for determining or calculating a design for a progressive spectacle lens by means of a prescribed design polygon (10) according to one of the claims 12 to 14,
- calculating or optimising the spectacle lens according to the calculated spectacle lens design.

**18.** Method according to claim 17, wherein the calculation or optimisation of the spectacle lens comprises minimisation of the target function:

$$F(\bar{x}) = \sum_{i=1}^{m} \left[ g_{i,ast}(ast_i - ast_{i,ref.})^2 + ... \right]$$

wherein there are described

$ast_{i,ref}$ the reference value of the local astigmatic deviation or of the local astigmatic error at the $i^{th}$ evaluation point;

$ast_i$ the actual value of the local astigmatic deviation or of the local astigmatic error at the $i^{th}$ evaluation point;
$g_{i,ast}$ the local weighting of the astigmatic deviation or of the local astigmatic error at the $i^{th}$ evaluation point.

**19.** Device for producing a progressive spectacle lens, comprising:

- design calculation means which are designed to calculate a design for the progressive spectacle lens according to the method for producing or calculating a progressive spectacle lens design according to one of the claims 12 to 14; and
- optimisation or calculation means which are designed to implement a calculation or optimisation of the spectacle lens according to the calculated design.

**20.** Computer programme product which is designed, when loaded and run on a computer, to implement a method for calculating and optimising a progressive spectacle lens, wherein the method comprises the following steps;

- calculating a design for the progressive spectacle lens according to the method for producing or calculating a progressive spectacle lens design according to one of the claims 12 to 14;
- calculating or optimising the progressive spectacle lens according to the calculated design.

**Revendications**

**1.** Procédé assisté par ordinateur pour l'évaluation, respectivement le calcul, de paramètres de design $D^j$, $j = 1, ..., M$, d'un design d'un verre progressif au moyen d'un polygone de design (10) prédéterminé, où :

- chaque point $P$ à l'intérieur du polygone de design (10) désigne, respectivement détermine, chaque fois un design et le design au point $P$ est **caractérisé par** des valeurs de design $D^j(P)$ ;
- les valeurs de design $D^j(P_{sommet})$, $j = 1, ..., M$, des paramètres de design qui caractérisent le design aux points respectifs des sommets $P_{sommmet}$ du polygone de design (10) sont prédéterminées, respectivement peuvent être prédéterminées ;
- des valeurs *optionnelles* $D^j(P_{supplémentaire})$ des paramètres de design qui caractérisent le design au moins au niveau d'un point supplémentaire $P_{supplémentaire}$ à l'intérieur du polygone de design (10) sont prédéterminés, respectivement peuvent être prédéterminés ;

le procédé comprenant les étapes de :

- prédétermination d'un point $P_{design}$ à l'intérieur du polygone de design (10), le point $P_{design}$ définissant le design à évaluer ;
- évaluation d'une valeur $D^j(P_{design})$ de chaque paramètre de design $D^j$, $j = 1, ..., M$, du design à évaluer au point $P_{design}$ au moyen d'une interpolation d'au moins une partie des valeurs prédéterminées $D^j(P_{sommet})$, $j = 1, ..., M$, aux points des sommets $P_{sommet}$ et éventuellement au moins une partie des valeurs prédéterminées $D^j(P_{supplémentaire})$ du paramètre de design $D^j$ au niveau d'au moins un point supplémentaire $P_{supplémentaire}$

et où $M$ désigne le nombre de paramètres de design.

**2.** Procédé selon la revendication 1 où l'interpolation est au moins partiellement une interpolation linéaire.

**3.** Procédé selon l'une des revendications précédentes où le polygone de design (10) est un triangle de design, de préférence un triangle de design à côtés égaux.

**4.** Procédé selon l'une des revendications précédentes où les valeurs $D^j(P_{suppplémentaire})$ des paramètres de design $D^j$, $j = 1, ..., M$, au niveau d'au moins un point supplémentaire $P_{supplémentaire}$ sont prédéterminés, respectivement peuvent être prédéterminés, sur chacun des côtés latéraux du polygone de design (10).

**5.** Procédé selon l'une des revendications précédentes où

- les valeurs $D^j(P_{central})$ des paramètres de design $D^j$, $j = 1, ..., M,$ qui caractérisent le design à un point central $P_{central}$ à l'intérieur du polygone de design (10), sont prédéterminées, respectivement peuvent être prédéterminées ;

et où

- la valeur $D^j(P_{design})$ d'un paramètre de design $D^j$ au point $P_{design}$ est calculée au moyen d'une interpolation d'au moins une partie des valeurs prédéterminées $D^j(P_{sommet})$ du paramètre de design $D^j$ aux points des sommets $P_{sommet}$ et de la valeur $D^i(Pcentral)$ du paramètre de design $D^j$ au point central $P_{central}$.

6. Procédé selon la revendication 5 où l'interpolation comporte les étapes suivantes :

- évaluation du point de coupure $P_{coupure}$ dans la direction du vecteur $P_{central}P_{design}$ de la droite passant par le point central $P_{central}$ et le point $P_{design}$ avec l'un des côtés latéraux du polygone de design (10), le vecteur $P_{central}P_{design}$ partant du point central $P_{central}$ et terminant au point $P_{design}$ ;
- évaluation des deux points les plus proches $P_{NL1}$ et $P_{NL2}$ sur le côté latéral du polygone de design (10) sur lesquels se situe également le point de coupure $P_{coupure}$, auxquels sont prédéterminées des valeurs correspondantes $D^j(P_{NL1})$, respectivement $D^j(P_{NL2})$ du paramètre de design $D^j$, le point de coupure $P_{coupure}$ se situant entre les deux points $P_{NL1}$ et $P_{NL2}$ sur le côté latéral du polygone de design (10) ;
- évaluation de la valeur $D^j(P_{coupure})$ du paramètre de design $D^j$ au point de coupure $P_{coupure}$ au moyen d'une première interpolation des valeurs du paramètre de design $D^i(PNL1)$ et $D^i(P_{NL2})$ aux deux points $P_{NL1}$ et $P_{NL2}$ ;
- évaluation de la *valeur $D^i(Pdesign)$* du paramètre de design $D^j$ au point $P_{design}$ au moyen d'une seconde interpolation de la valeur déterminée $D^i(P_{coupure})$ du paramètre de design $D^j$ au point de coupure $P_{coupure}$ et de la valeur $D^j(P_{central})$ du paramètre de design $D^j$ au point central $P_{central}$.

7. Procédé selon la revendication 6 où l'interpolation a lieu dans un système de coordonnées polaires $(\varphi,\rho)$ où l'origine du système de coordonnées correspondant au point central $P_{central}$ et où la première interpolation est une interpolation de préférence linéaire selon la coordonnée polaire $\varphi$, et la seconde interpolation est une interpolation de préférence linéaire selon la coordonnée polaire $\rho$.

8. Procédé selon la revendication 7 où :

- on a pour la première interpolation :

$$D^j(P_{coupure}) = D^j(P_{NL1}) + \frac{D^j(P_{NL2}) - D^j(P_{NL1})}{(\varphi_{NL2} - \varphi_{NL1})}(\varphi - \varphi_{NL1}) \;;$$

et

- on a pour la seconde interpolation :

$$D^j(P_{design}) = D^j(P_{coupure}) + \frac{D^j(P_{central}) - D^j(P_{coupure})}{\rho}(\rho_S - \rho_i)$$

ou

$$D^j(P_{design}) = D^j(P_{coupure}) + (D^j(P_{central}) - D^j(P_{coupure})(1 - \alpha)$$

où :

$(\varphi,\rho)$ désignent les coordonnées polaires du point $P_{design}$ ;
$(\varphi_{NL1}, \rho_{NL2})$ et $(\varphi_{NL2}, \rho_{NL2})$ désignent les coordonnées polaires des deux points voisins suivants $P_{NL1}$ et $P_{NL2}$, où on a la relation $\varphi_{NL1} \le \varphi \le \varphi_{NL2}$ ;
$\rho_S$ désigne la distance du point $P_{coupure}$ au point central $P_{central}$ ;
$D^i(P_{NL1})$ et $D^j(P_{NL2})$ désignent les valeurs respectives du paramètre de design $D^j$ aux points $P_{NL1}$, respectivement $P_{NL2}$, les points $P_{NL1}$ et $P_{NL2}$ représentant les points les plus proches du point $P_{design}$, pour lesquels les paramètres de design $D^j$ sont prédéterminés ; et

$D^j (P_{central})$ désigne la valeur du paramètre de design $D^j$ au point central $P_{central}$.

9. Procédé selon l'une des revendications précédentes où les paramètres de design $D^j$ comprennent un ou plusieurs parmi les paramètres suivants :

- pondération de la partie vue de loin ;
- pondération de la partie vue de près ;
- pondération de la partie progression ;
- pondération de la dynamique ;
- point principaux d'utilisation du verre de lunette ;
- paramètres qui déterminent la position de la partie vue de loin, partie vue de près et/ou de la partie progressive ;
- position dans l'espace du point vue de loin, et/ou du point vue de près, respectivement du point de design ;
- paramètres qui déterminent la trajectoire de la fonction distance objet ;
- paramètres qui déterminent la trajectoire d'une ou de plusieurs lignes d'astigmatisme théoriques ;
- aberrations optiques maximales permissibles, en particulier erreur de réfraction maximale permissible, et/ou erreur d'astigmatisme maximale permissible, et/ou gradient d'astigmatisme maximal permissible.

10. Dispositif pour l'évaluation, respectivement le calcul, de paramètres de design $D^j$, $j = 1, ..., M$, d'un design pour un verre de lunette progressif, comprenant :

- des moyens d'enregistrement du polygone de design pour l'enregistrement de données d'un polygone de design (10) prédéterminé, où chaque point $P$ à l'intérieur du polygone de design (10) désigne, respectivement détermine, chaque fois un design et où le design au point $P$ est **caractérisé par** des valeurs de design $D^j(P)$ ; les moyens d'enregistrement de polygone de design comprenant :

- des moyens d'enregistrement de design pour l'enregistrement des valeurs de design de sommets $D^j$ $(P_{sommet})$, $j = 1, ..., M$, des paramètres de design qui caractérisent le design à chaque point de sommet $P_{sommet}$ du polygone de design (10), et
- des moyens d'enregistrements supplémentaires optionnels pour l'enregistrement des valeurs $D^j$ $(P_{supplémentaire})$ des paramètres de design qui caractérisent le design à au moins un point supplémentaire $P_{supplémentaire}$ à l'intérieur du polygone de design (10),

- des moyens de calcul des paramètres de design qui sont prévus pour réaliser l'évaluation, respectivement le calcul, du paramètre de design $D^j$, $j = 1, ..., M$, du design à calculer selon l'une des revendications de 1 à 9 en fonction du polygone de design (10) prédéterminé enregistré.

11. Résultat d'un programme d'ordinateur qui est conçu, lorsqu'il est chargé et exécuté dans un ordinateur, pour évaluer un procédé, respectivement calculer les paramètres de design $D^j$, $j = 1, ..., M$, d'un design pour un verre de lunette progressif selon l'une des revendications de 1 à 9.

12. Procédé assisté par ordinateur pour l'évaluation, respectivement le calcul, d'un design pour un verre de lunette progressif au moyen d'un polygone de design (10) prédéterminé, où :

- chaque point $P$ à l'intérieur du polygone de design (10) désigne, respectivement détermine, chaque fois un design et le design au point $P$ est **caractérisé par** des valeurs de design $D^j(P)$ ;
- les valeurs de *design $D^j$* $(P_{sommet})$, $j = 1, ..., M$, des paramètres de design qui caractérisent le design à chaque point de sommet $P_{sommet}$ du polygone de design (10) sont prédéterminées, respectivement peuvent être prédéterminées ; et
- optionnellement, les *valeurs $D^j$* $(P_{supplémentaire})$ des paramètres de design qui caractérisent le design à au moins un point supplémentaire $P_{supplémentaire}$ à l'intérieur du polygone de design (10) sont prédéterminés, respectivement peuvent être prédéterminés ;

le procédé comprenant :

- l'évaluation, respectivement le calcul, des paramètres de design pour un verre de lunette progressif conformément au procédé selon l'une des revendications de 1 à 9 ;
- le calcul d'un design au moyen des paramètres de design évalués.

**13.** Procédé selon la revendication 12 comprenant en outre une modification du design évalué, où la modification s'effectue de manière interactive dans un dialogue avec un utilisateur et/ou de manière automatique au moyen de données individuelles et/ou de préférences d'un porteur de lunettes.

**14.** Procédé selon la revendication 13 comprenant en outre la visualisation de la position spatiale du design modifié à l'intérieur du polygone de design (10).

**15.** Résultat d'un programme d'ordinateur qui est conçu, lorsqu'il est chargé et exécuté sur un ordinateur, pour réaliser un procédé en vue de l'évaluation, respectivement du calcul, d'un design pour un verre de lunette progressif au moyen d'un polygone de design (10) prédéterminé selon l'une des revendications de 12 à 14.

**16.** Dispositif pour l'évaluation, respectivement le calcul, d'un design pour un verre de lunette progressif comprenant :

- des moyens d'enregistrement du polygone de design pour l'enregistrement de données d'un polygone de design (10) prédéterminé, où chaque point $P$ à l'intérieur du polygone de design (10) désigne, respectivement détermine, chacun un design et où le design au point $P$ est **caractérisé par** des valeurs de design $D^j$ ($P$) ; les moyens d'enregistrement du polygone de design comprenant :

- des moyens d'enregistrement de design de sommets pour l'enregistrement des valeurs de design $D^j$ ($P_{sommet}$), $j$ = 1...., $M$, des paramètres de design qui caractérisent le design aux points de sommet respectifs $P_{sommet}$ du polygone de design (10), et
- éventuellement, des moyens d'enregistrement supplémentaires pour l'enregistrement des valeurs $D^j$ ($P_{supplémentaire}$) des paramètres de design qui caractérisent le design à au moins un point supplémentaire $P_{supplémentaire}$ à l'intérieur du polygone de design (10),

- des moyens de calcul de design qui sont prévus pour réaliser un design pour un verre de lunette progressif conformément au procédé, respectivement calculer un design pour un verre de lunette progressif selon l'une des revendications de 12 à 14.

**17.** Procédé assisté par ordinateur pour la fabrication d'un verre de lunette progressif comprenant:

- l'évaluation, respectivement le calcul, d'un design pour un verre de lunette progressif conformément au procédé pour l'évaluation, respectivement le calcul, du design d'un verre de lunette progressif au moyen d'un polygone de design (10) prédéterminé selon l'une des revendications de 12 à 14.
- le calcul, respectivement l'optimisation, du verre de lunette selon le design du verre de lunette calculé.

**18.** Procédé selon la revendication 17 où le calcul, respectivement l'optimisation, du verre de lunette comprend une minimisation de la fonction cible :

$$F(\vec{x}) = \sum_{i=0}^{m} [g_{i,Ast} (Ast_i - Ast_{i,théorique})^2 + ...]$$

où

$Ast_{i,théorique}$ désigne la valeur théorique de la déviation astigmatique locale, respectivement l'erreur astigmatique locale, à la $i^{ème}$ position de détermination ;
$Ast_i$ désigne la valeur réelle de la déviation astigmatique locale, respectivement l'erreur astigmatique locale, à la $i^{ème}$ position de détermination ;
$G_{i,Ast}$ désigne la pondération locale de la déviation astigmatique, respectivement l'erreur astigmatique locale, à la $i^{ème}$ position de détermination.

**19.** Dispositif pour la fabrication d'un verre de lunette progressif comprenant :

- des moyens de calcul de design qui sont conçus pour réaliser un design pour le verre de lunette progressif selon le procédé, respectivement pour calculer un design de verre de lunette progressif selon l'une des revendications de 12 à 14 ; et
- des moyens d'optimisation, respectivement de calcul, qui sont conçus pour un calcul, respectivement une optimisation, d'un verre de lunette d'après le design calculé.

20. Résultat d'un programme d'ordinateur qui est conçu, lorsqu'il est chargé et exécuté sur un ordinateur, pour calculer un procédé et optimiser un verre de lunette progressif, le procédé comprenant les étapes suivantes :

- calcul d'un design pour le verre de lunette progressif conformément à un procédé pour la fabrication, respectivement le calcul, du design d'un verre de lunette progressif selon l'une des revendications de 12 à 14 ;
- le calcul, respectivement l'optimisation, du verre de lunette progressif d'après le design calculé.

# Figur 1

# Figur 2

| Koeffizienten der Eckdesigns | Sp.1 | Sp.2 | Sp.3 | Sp.4 | Sp.5 | Sp.6 | Sp.7 |
|---|---|---|---|---|---|---|---|
| Designzahl-Basis | 0.0 | 30.00 | 90 | 150.00 | 210 | 270.00 | 330 |
| A1BF | 0.70 | 0.60 | 0.40 | 0.55 | 1.50 | 1.20 | 1.05 |
| A1BN | 2.50 | 2.50 | 2.50 | 2.50 | 2.50 | 2.50 | 2.50 |
| FTGW | 30.00 | 0.00 | 100.00 | 100.00 | 0.00 | 0.00 | 100.00 |
| PZGW | 50.00 | 0.00 | 0.00 | 0.00 | 0.00 | 0.00 | 100.00 |
| NTGW | 40.00 | 10.00 | 50.00 | 100.00 | 100.00 | 20.00 | 55.00 |
| DkGW | 0.00 | 0.00 | 0.00 | 0.00 | 0.00 | 0.00 | 0.00 |

# Figur 3

$D_{90°}$

10

$D_{150°}$                 $D_{30°}$

$D_{210°}$       $D_{270°}$       $D_{330°}$

# Figur 4

| Koeffizienten der Eckdesigns | Sp.1 | Sp.2 | Sp.3 | Sp.4 | Sp.5 | Sp.6 | Sp.7 | X |
|---|---|---|---|---|---|---|---|---|
| Designzahl-Basis | 0.0 | 30.00 | 90 | 150.00 | 210 | 270.00 | 330 | |
| A1BF | 0.70 | 0.60 | 0.40 | 0.55 | 1.50 | 1.20 | 1.05 | |
| A1BN | 2.50 | 2.50 | 2.50 | 2.50 | 2.50 | 2.50 | 2.50 | |
| FTGW | 30.00 | 0.00 | 100.00 | 100.00 | 0.00 | 0.00 | 100.00 | |
| PZGW | 50.00 | 0.00 | 0.00 | 0.00 | 0.00 | 0.00 | 100.00 | |
| NTGW | 40.00 | 10.00 | 50.00 | 100.00 | 100.00 | 20.00 | 55.00 | |
| DkGW | 0.00 | 0.00 | 0.00 | 0.00 | 0.00 | 0.00 | 0.00 | |

**FIG 5a**

## FIG 5b

EP 2 389 611 B1

**FIG 6**

40A

| Startseite | Performance Consulting | Free Sign Consulting | Ergb Consulting | Einstellungen | Impressum | Hilfe | Beenden |

**RODENSTOCK**

Kunde: Mustermann Rosi

⊕ Kunde
⊕ Ergebnis

Empfehlung Übernehmen

Tunerwerte Übernehmen

Daten Speichern

Kundeninfo drucken

Bestellung drucken

44

90cm

65cm

40cm

Die Degressionszonenlänge passt aufgrung der kleinen Fassung nicht zu den gewählten Präferenzen

⊙ Designempfehlung          ○ Designtuner

Designpunkte
DR        DN
0,8      -17.0

46

42

Raum

10

12

Nähe                    Zwischenbereich

Design-Charakteristik

| 10 | 45 | 45 |

FIG 7

EP 2 389 611 B1

# FIG 8

**40C**

RODENSTOCK

| Startseite | Performance Consulting | Free Sign Consulting | Ergo Consulting | Einstellungen | Impressum | Hilfe | Beenden |

Kunde: Mustermann Rosi

⊜ Kunde
⊜ Ergebnis

Empfehlung Übernehmen

Tunerwerte Übernehmen

Daten Speichern

Kundeninfo drucken

Bestellung drucken

**44**

☑ binokulare Fassung einblenden

90cm

65cm

40cm

○ Designempfehlung    ⊙ Designtuner

Designpunkte    **46**

DR    DN
0,8    -20

Raum    **42**

**10**

**12**

**12'**

Nähe    Zwischen-bereich

Design-Charakteristik

| 10 | 45 | 45 |

Design    Distanz-Modell

EP 2 389 611 B1

# Figur 9

# Figur 10

10

190cm / 80cm / 40cm
max. 250cm / min. 35cm
(71/14/14)

Hauptsehentfernungen R/M/N
Erweiterte Komfortentfernungen
Designcharakteristik

90cm / 60cm / 40cm
max. 110cm / min. 35cm
(14/14/71)

110cm / 80cm / 40cm
max. 140cm / min. 35 cm
(14/71/14)

# FIG 11

EP 2 389 611 B1

# FIG 12

**60**

| | Startseite | Performance Consulting | Free Sign Consulting | Ergo Consulting | Einstellungen | Impressum | Hilfe | Beenden |

RODENSTOCK

**Mustermann Thomas**

- Kunde
  - Kundendaten
  - Bestellwert
  - Design Profiler
- Ergebnis

Für welche Tätigkeiten bzw. Sehanforderungen nutzen Sie Ihre Brille?
Die Anzahl der Punkte pro Bereich bestimmt dessen Wichtigkeit beim Sehen

Vergeben Sie bitte max. 10 Punkte um die Schwerpunkte zu verteilen

① ② ③ ④ ⑤ ⑥ ⑦ ⑧ ⑨ ⑩

① ② ③ ④ ⑤  Raum

① ② ③ ④ ⑤  Zwischenbereich

① ② ③ ④ ⑤  Nähe

Info

Speichern

EP 2 389 611 B1

# FIG 13

**FIG 14**    40E

RODENSTOCK | Startseite | Performance Consulting | Free Sign Consulting | Ergo Consulting | Einstellungen | Impressum | Hilfe | Beenden

⊙ Designempfehlung  ○ Designtuner

- Kunde
- Ergebnis

115

**Designpunkte** ~46
DR    DN
0,9   -17,8

79

44

40

☑ binokulare Fassung einblenden

Empfehlung übernehmen
Tunewerte übernehmen
Ausdruck Kundeninfo
Bestellung Drucken
Daten speichern

△

→

Room

12    10

12'

Book                    PC

**Design-Charakteristik**

| 20 | 45 | 33 |
|----|----|----|
| R  | M  | N  |

~42

EP 2 389 611 B1

FIG 15

EP 2 389 611 B1

# Figur 16

Impression Ergo FS

DM

DN

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19701312
- DE 10313275
- WO 0181979 A
- US 6871955 B
- EP 0880046 A
- WO 2008089998 A
- WO 2008089995 A
- WO 2008089996 A
- DE 102009005206
- DE 102009005214
- DE 102008015189